# EUROPEAN PATENT SPECIFICATION

(11) **EP 4 559 137 B1**
(45) Date of publication and mention of the grant of the patent: **01.04.2026**
(21) Application number: 23754908.4
(22) Date of filing: 20.07.2023
(51) Int. Cl.: H04L 9/40, H04W 12/06, H04W 12/08

(54) **USER DEFINED NETWORK SERVICE AUTHORIZATION BASED ON SECONDARY IDENTITY CREDENTIALS**
BENUTZERDEFINIERTE NETZWERKDIENSTAUTORISIERUNG AUF BASIS VON SEKUNDÄREN IDENTITÄTSBERECHTIGUNGEN
AUTORISATION DE SERVICE DE RÉSEAU DÉFINI PAR L'UTILISATEUR À BASE DE JUSTIFICATIFS D'IDENTITÉ SECONDAIRES

(30) Priority: 22.07.2022 US 202217871737
(43) Date of publication of application: 28.05.2025
(73) Proprietor: Cisco Technology, Inc., San Jose, CA 95134 (US)
(72) Inventor: GUNDAVELLI, Srinath, San Jose, CA 95135 (US); ORR, Stephen Michael, NY 12589 (US); MURTHY, Shree Narasimha, San Jose, CA 95129 (US); KATHAIL, Pradeep Kumar, Los Altos, CA 94024 (US)
(74) Representative: Mathys & Squire
(86) International application number: PCT/US2023/028220
(87) International publication number: WO 2024/020128

(56) References cited:
- WO-A1-2023/010077
- US-A1- 2019 215 692
- US-A1- 2022 053 332
- US-A1- 2022 060 893

## Description

This application claims priority to U.S. Patent Application No. 17/871,737, filed July 22, 2022.

### TECHNICAL FIELD

The present disclosure relates generally to the field of networking, and more particularly to techniques for providing second credentials for a user defined network (UDN) service authorization and simplifying UDN configuration.

### BACKGROUND

Computer networks are generally a group of computers or other devices that are communicatively connected and use one or more communication protocols to exchange data, such as by using packet switching. For instance, computer networking can refer to connected computing devices (such as laptops, desktops, servers, smartphones, and tablets) as well as an ever-expanding array of Internet-of-Things (IoT) devices (such as cameras, door locks, doorbells, refrigerators, audio/visual systems, thermostats, and various sensors) that communicate with one another. Modem-day networks deliver various types of network architectures, such as Local-Area Networks (LANs) that are in one physical location such as a building, Wide-Area Networks (WANs) that extend over a large geographic area to connect individual users or LANs, Enterprise Networks that arc built for a large organization, Internet Service Provider (ISP) Networks that operate WANs to provide connectivity to individual users or enterprises, software-defined networks (SDNs), wireless networks, core networks, cloud networks, and so forth.

These networks often include specialized network devices to communicate packets representing various data from device-to-device, such as switches, routers, servers, access points, and so forth. Each of these devices is designed and configured to perform different networking functions. For instance, switches act as controllers that allow devices in a network to communicate with each other. Routers connect multiple networks together, and also connect computers on those networks to the Internet, by acting as a dispatcher in networks by analyzing data being sent across a network and choosing an optimal route for the data to travel. Access points act like amplifiers for a network and serve to extend the bandwidth provided by routers so that the network can support many devices located further distances from each other.

Within the networks, user defined networks (UDNs) may be offered. A UDN is a construct in the enterprise networks for creating logical private groups. The UDN concept is about allowing an end-user to create a private network, which helps in limiting scope for service-discovery, realizing traffic segmentation, and enforcing access controls at the group level.

Currently, users have the ability to create their own UDN in a shared environment. For instance, an end user may manually configure a UDN using an application, self-registering with a cloud service, or through a policy engine. When creating the UDN, the end user registers the identity (e.g., MAC addresses) of the user(s) and devices that may access and/or communicate with the UDN. The cloud service may assign a unique identity to the new UDN group and the unique identifier is then communicated to the infrastructure to enforce segmentation and traffic containment policies within the network. Users and devices may switch between UDN groups through an explicit invite and accept workflow, where the invite and accept workflow is initiated each time a user and/or device access the UDN group and/or tries to switch to a new UDN group.

However, current techniques support MAC rotation (e.g., MAC addresses updated/changed periodically for privacy reasons), such that utilizing MAC addresses for group member identity becomes difficult and may require an end user to identify and re-register and/or add the device to a UDN group each time the MAC addresses are rotated. Moreover, having the end user create a list of device identities that may access the UDN group at the time of the UDN group's creation and manually updating the list (e.g., by registering and/or adding a device) each time a new device tries to access the UDN group, results in the UDN group being static, such that switching a device between two UDN groups is difficult.

Accordingly, there is a need to simplify and streamline UDN configuration and provide a dynamic technique to enable end users to switch between UDN groups without relying on user-initiated registration or requiring link-layer identifiers.

US 2022/0053332 Al generally relates to systems and methods of providing secondary authentication credentials for an external network are described. The credentials are provided from the UE to the GGSN via the SGSN during establishment of a PDN connection for the UE in a NAS message. The SGSN receives an Activate PDP Context Request from the UE and sends to the GGSN a Create PDP Context Request. The Requests include a PCO IE with the credentials. The GGSN determines a RADIUS and/or DHCP server to be used for IP address allocation, a protocol to be used with the server, and security features to use to dialogue with the server. The GGSN obtains the IP address from the server and provides the IP address to the UE via the SGSN via Create PDP Context Response.

US 2022/0060893 Al generally relates to techniques to facilitate delivering standalone non-public network (SNPN) credentials from an enterprise authentication server to a user equipment (UE) using an Extensible Authentication Protocol (EAP) process. A method may include determining, by an authentication server of an enterprise, that a UE for the enterprise is to receive credentials to enable the UE to connect to a SNPN of the enterprise in which the determining is performed based, at least in part, on connection of the UE to an access network that is different than the SNPN for the enterprise; and performing an authentication process with the UE by the authentication server in which the authentication process includes providing the credentials to the UE via a first authentication message and obtaining confirmation from the UE via a second authentication message that indicates successful provisioning of the credentials for the UE.

### BRIEF DESCRIPTION OF THE DRAWINGS

The detailed description is set forth below with reference to the accompanying figures. In the figures, the left-most digit(s) of a reference number identifies the figure in which the reference number first appears. The use of the same reference numbers in different figures indicates similar or identical items. The systems depicted in the accompanying figures are not to scale and components within the figures may be depicted not to scale with each other.
FIG. 1 illustrates a system-architecture diagrams of an environment in which UDN service authorization based on secondary identity credentials is supported.
FIGS. 2A-2C illustrate a flow diagram of example communications corresponding to an end user device initiating a secondary EAP dialogue using secondary credentials in order to access a UDN group.
FIGS. 3A-3C illustrate a flow diagram of example communications corresponding to a controller initiating a secondary EAP dialogue with a user device in order to enable the user device to access a UDN group.
FIG. 4 illustrates a flow diagram of an example method for a system to perform UDN service authorization based on secondary identity credentials.
FIG. 5 illustrates a flow diagram of an example method for a device to perform UDN service authorization based on secondary identity credentials.
FIG. 6 is a computer architecture diagram showing an illustrative computer hardware architecture for implementing a server device that can be utilized to implement aspects of the various technologies presented herein.

### DESCRIPTION OF EXAMPLE EMBODIMENTS

### OVERVIEW

The present invention is defined by the appended claims. Aspects of the invention are set out in the independent claims and preferred features are set out in the dependent claims.

The present disclosure relates generally to techniques for performing UDN service authorization based on secondary identity credentials.

### EXAMPLE EMBODIMENTS

Computer networks are generally a group of computers or other devices that are communicatively connected and use one or more communication protocols to exchange data, such as by using packet switching. For instance, computer networking can refer to connected computing devices (such as laptops, desktops, servers, smartphones, and tablets) as well as an ever-expanding array of Internet-of-Things (IoT) devices (such as cameras, door locks, doorbells, refrigerators, audio/visual systems, thermostats, and various sensors) that communicate with one another. Modern-day networks deliver various types of network architectures, such as Local-Area Networks (LANs) that are in one physical location such as a building, Wide-Area Networks (WANs) that extend over a large geographic area to connect individual users or LANs, Enterprise Networks that are built for a large organization, Internet Service Provider (ISP) Networks that operate WANs to provide connectivity to individual users or enterprises, software-defined networks (SDNs), wireless networks, core networks, cloud networks, and so forth.

These networks often include specialized network devices to communicate packets representing various data from device-to-device, such as switches, routers, servers, access points, and so forth. Each of these devices is designed and configured to perform different networking functions. For instance, switches act as controllers that allow devices in a network to communicate with each other. Routers connect multiple networks together, and also connect computers on those networks to the Internet, by acting as a dispatcher in networks by analyzing data being sent across a network and choosing an optimal route for the data to travel. Access points act like amplifiers for a network and serve to extend the bandwidth provided by routers so that the network can support many devices located further distances from each other.

Within the networks, user defined networks (UDNs) may be offered. A UDN is a construct in the enterprise networks for creating logical private groups. The UDN concept is about allowing an end-user to create a private network, which helps in limiting scope for service-discovery, realizing traffic segmentation, and enforcing access controls at the group level.

Currently, users have the ability to create their own UDN in a shared environment. For instance, an end user may manually configure a UDN using an application, self-registering with a cloud service, or through a policy engine. When creating the UDN, the end user registers the identity (e.g., MAC addresses) of the user(s) and devices that may access and/or communicate with the UDN. The cloud service may assign a unique identity to the new UDN group and the unique identifier is then communicated to the infrastructure to enforce segmentation and traffic containment policies within the network. Users and devices may switch between UDN groups through an explicit invite and accept workflow, where the invite and accept workflow is initiated each time a user and/or device access the UDN group and/or tries to switch to a new UDN group.

However, current techniques support MAC rotation (e.g., MAC addresses updated/changed periodically for privacy reasons), such that utilizing MAC addresses for group member identity becomes difficult and may require an end user to identify and re-register and/or add the device to a UDN group each time the MAC addresses are rotated. Moreover, having the end user create a list of device identities that may access the UDN group at the time of the UDN group's creation and manually updating the list (e.g., by registering and/or adding a device) each time a new device tries to access the UDN group, results in the UDN group being static, such that switching a device between two UDN groups is difficult.

Accordingly, there is a need to simplify and streamline UDN configuration and provide a dynamic technique to enable end users to switch between UDN groups without relying on user-initiated registrations or requiring link-layer identifiers.

This disclosure describes techniques and mechanisms for performing UDN service authorization based on secondary identity credentials within a wireless network. For instance, the techniques may include receiving, from a user device, a first request to access a wireless network (e.g., such as a WLAN), where the first request may include primary access credentials. Once primary access authentication of the user device is complete, the techniques may include receiving a second request to access a UDN group within the wireless network. The second request can include secondary credentials for accessing the UDN group. In response to the second request, a secondary EAP dialogue may be established to authenticate the user device using the secondary credentials. Once the secondary credentials are authenticated, the techniques may include granting the user device access to the UDN group.

Additionally, the techniques may comprise displaying, on a user interface of the device, one or more UDN groups within a wireless network, wherein each of the one or more UDN groups are associated with a respective profile of a user of the device; sending, from the device, a first request to access the wireless network, the first request including first credentials; accessing, by the device, the wireless network; sending, from the device, a second request to access a first UDN group of the one or more UDN groups, wherein the second request comprises second credentials associated with accessing the first UDN group; establishing, with the wireless network, a secondary EAP dialogue; and accessing, by the device, the first UDN group.

In some examples, the one or more UDN groups are associated with profiles of the user of the device. For instance, as described in greater detail below, a user of a user device may be associated with one or more UDN profiles. Each UDN profile may corresponds to a separate UDN group within the wireless network. Each UDN group and/or profile may have the same SSID and primary credentials, but may have different secondary identifiers and/or credentials specific to the UDN group.

In some examples, a user device may send a request to access a network and/or UDN group in response to receiving a selection of a UDN profile. As described in greater detail below, the network may perform primary access authentication of the user device using primary credentials. The user device may then send a request to the network to access a first UDN group associated with the UDN profile. The network may then perform secondary authentication of the user device (e.g., such as via an EAP dialogue) using secondary credentials associated with the UDN group.

As described in greater detail below, a user may select a second UDN profile in order to access a second UDN group. In this example, the user device sends a request to the network that includes the secondary credentials associated with the UDN group and the network may perform secondary authentication of the user device.

In this way, an end user may access a UDN group using secondary authentication that is exclusive to the UDN group. Accordingly, UDN service authorization is streamlined by eliminating the need to manually configure a user each time the user accesses a UDN group. Moreover, when a user switches between UDN groups, the user device is only required to perform secondary authentication for the UDN group (and not primary access authentication for the Wi-Fi network), thereby simplifying the UDN workflow and enabling dynamic UDN groups. Additionally, by providing multiple SSID profiles for the same SSID, with secondary identities specific to UDN groups, the current techniques eliminate the need to rely on MAC addresses as device identifiers.

Certain implementations and embodiments of the disclosure will now be described more fully below with reference to the accompanying figures, in which various aspects are shown. However, the various aspects may be implemented in many different forms and should not be construed as limited to the implementations set forth herein. The disclosure encompasses variations of the embodiments, as described herein. Like numbers refer to like elements throughout.

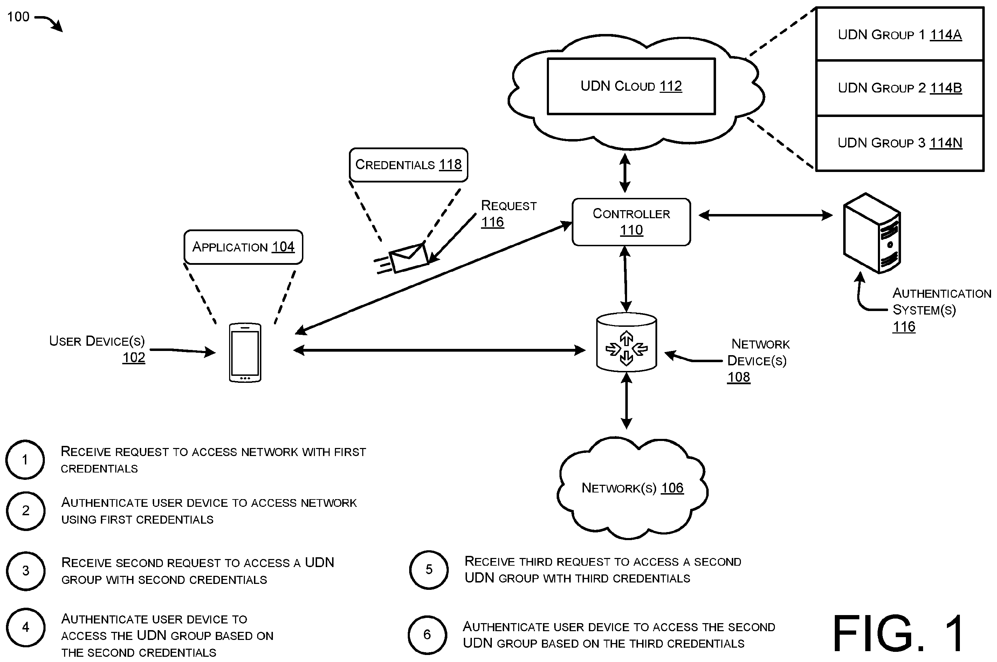

FIG. 1 illustrates a system-architecture diagrams of an environment 100 in which UDN service authorization based on secondary identity credentials is supported. In some examples, the environment 100 may include a user device 102. The user device 102 may include any computing device, such as a mobile device, a laptop, a computer, a tablet, or any Wi-Fi enabled device and/or any Bluetooth enabled device. In some examples, the user device 102 may correspond to a device of an administrator (not shown). In some examples, the user device 102 may correspond to a device of an end user. The user device 102 may include an application 104. The application 104 may correspond to a UDN application that enables a user of the user device 102 to access network(s) 106, create UDN network(s), etc.

In some examples, the user device 102 may communicate with one or more of a controller 110 and/or network device 108 in order to access network(s) 106. Networks 106 may include any combination of Personal Area Networks (PANs), Local Area Networks (LANs), Campus Area Networks (CANs), Metropolitan Area Networks (MANs), extranets, intranets, the Internet, Wide Area Networks (WANs) - both centralized and/or distributed - and/or any combination, permutation, and/or aggregation thereof. The user device(s) 102 and/or network device(s) 108 may communicate using any type of protocol over the network(s) 106, such as the transmission control protocol / Internet protocol (TCP/IP) that is used to govern connects to and over the Internet.

In some examples, the network(s) 106 may corresponds to a service network that includes devices housed or located in one or more data centers. The service network may include one or more networks implemented by any viable communication technology, such as wired and/or wireless modalities and/or technologies. The service network may include any combination of Personal Area Networks (PANs), Local Area Networks (LANs), Wireless LANs, Campus Area Networks (CANs), Metropolitan Area Networks (MANs), extranets, intranets, the Internet, short-range wireless communication networks (e.g., ZigBee, Bluetooth, etc.), Wide Area Networks (WANs) - both centralized and/or distributed - and/or any combination, permutation, and/or aggregation thereof. The service network may include devices, virtual resources, or other nodes that relay packets from one network segment to another by nodes in the computer network. The service network may include multiple devices that utilize the network layer (and/or session layer, transport layer, etc.) in the OSI model for packet forwarding, and/or other layers.

The one or more data centers may be physical facilities or buildings located across geographic areas that designated to store networked devices that are part of manufacturer 102. The data centers may include various network devices, as well as redundant or backup components and infrastructure for power supply, data communications connections, environmental controls, and various security devices. In some examples, the data centers may include one or more virtual data centers which are a pool or collection of cloud infrastructure resources specifically designed for enterprise needs, and/or for cloud-based service provider needs. Generally, the data centers (physical and/or virtual) may provide basic resources such as processor (CPU), memory (RAM), storage (disk), and networking (bandwidth). However, in some examples the devices in the packet-forwarding networks may not be located in explicitly defined data centers, but may be located in other locations or buildings.

In some examples, network device(s) 108 correspond to any computing device, routers, switches, computers, or any other type of network device. In some examples, the network device(s) 108 may comprise an access point. For instance, as illustrated in FIG. 1, the user device 102 may be connected to the network(s) 106 via an access point 108.

In some examples, the controller 110 may comprise a computing device, processor(s), memory, etc. For instance, the controller 110 may correspond to a Cisco IOS based Catalyst Series physical wireless LAN controller (WLC) or a virtual WLC. In some examples, the controller 110 may be included as part of one or more of the network device 108, authentication system 116, and/or UDN cloud 112.

In some examples, the controller 110 may be connected to and/or communicate with one or more authentication system(s) 116. In some examples, the authentication system 116 may include any website, database, server(s), computing device(s), or other service. The controller 110 may connect and/or access the authentication system 116 to initiate primary authentication and/or secondary authentication of the user device (e.g., such as via an EAP dialogue). In some examples, the authentication system 116 corresponds to one or more authentication, accounting, and authorization (AAA) engines. In some examples, the authentication system(s) 116 may correspond to an AAA engine and/or a third-party authentication service. In some examples, the authentication system 116 may be included as part of the network device 108 and/or the UDN cloud 112.

In some examples, the controller 110 may communicate with the UDN cloud 112 directly and/or indirectly. The UDN cloud 112 may comprise one or more UDN group(s) 114 within the network 106. For instance, the UDN cloud 112 may correspond to Cisco UDN Cloud.

As illustrated in FIG. 1, the user device 102 may communicate (e.g., send a request 116) with the network device 108 and/or controller 110 in order to access the network(s) 106 and/or UDN group(s) 114. In some examples, the request 116 may comprise credentials 118 (e.g., username, password, group identifier(s), etc.).

At "1", the controller 110 and/or network device 108 may receive a request to access a network, where the request includes first credentials. In some examples, the network 106 may correspond to a Wi-Fi network available on a school campus. In this example, the request 116 may comprise first credentials associated with accessing the Wi-Fi network. In some examples, the request 116 is sent in response to user input into a user device 102 and/or application 104. For instance, as described in greater detail below, the application may display profile(s) associated with the user, where each profile has a same primary identifier (e.g., SSID) associated with the network 106, but different secondary identifiers that are specific to the UDN group(s) 114). In some examples, such as where the network 106 is associated with a school, a first UDN group 114A may be associated with a first class and/or classroom and a second UDN group 114B may be associated with a second class and/or classroom.

As an example, where the network is named "Blizzard", the application and/or user device 102 may display two profiles associated with the user and UDN group(s): (1) Blizzard-Groupl (SSID=blizzard, primary identity=Joe, secondary identity=UDN-Group-1); and (2) Blizzard-Group2 (SSID=blizzard, primary identity=Joe, secondary identity=UDN-Group-2). In this example, the user may select the first profile associated with a first UDN group (e.g., "Blizzard-Group1") and the request to access the network 106 may be sent to network device 108 and/or controller 110.

At "2", the controller 110 and/or network device 108 may authenticate the user device to access the network using the first credentials. For instance, the controller 110 may perform access authentication using the first credentials associated with the Wi-Fi network. In some examples, the controller 110 may communicate with the authentication system 116 to authenticate the user device 102. For instance, where the first credentials comprise a username and password, the controller 110 may communicate with an authentication system to determine whether the username and password match those stored in a database. Once primary access authentication is complete, the user device 102 may access the Wi-Fi network.

At "3", the controller 110 and/or network device 108 may receive a second request to access a UDN group, where the second request includes second credentials. In some examples, the second request is sent automatically and without additional user input. For instance, the second request may be sent in response to the user device accessing the Wi-Fi network. For instance, where the first request is sent in response to a user selecting a first profile associated with a first UDN group, the second request may be sent in response to primary access authentication being completed. The second request may comprise second credentials. The second credentials may be associated with the UDN group. For instance, the second credentials may comprise a group identifier of the UDN group, a password associated with the UDN group, or any other credential. In some examples, the second request may comprise an EAP identity/request message that includes the second credentials.

At "4", the controller 110 and/or network device 108 may authenticate the user device to access the UDN group based on the second credentials. For instance, as described in greater detail below, the controller 110 may establish a secondary EAP dialogue with the user device in order to authenticate the second credentials. Once authenticated the controller 110 may add the user device to the UDN group, such that the user device has access to the UDN group (e.g., Blizzard-Group1).

At "5", the controller 110 and/or network device 108 may receive a third request to access a second UDN group, the third request including third credentials. In some examples, the third request may be associated with a user selecting a second profile (e.g., Blizzard-Group2). For instance, where the network is associated with a school, the user may select the second profile in response to changing classes and/or classrooms.

At "6", the controller 110 and/or network device 108 may authenticate the user device to access the second group based on the third credentials. For instance, the user device may initiate another EAP dialogue with the controller 110 in order to access the second UDN group. In some examples, the identity that is used for this EAP dialogue is the group identifier of the second UDN group (e.g., UDN-Group-2). Once authenticated, the controller 110 may grant access to the second UDN group to the user device, add the user device to the second UDN group, and remove the user device from the first UDN group. In some examples, the controller 110 may authenticate and grant the user device 102 access to the second UDN group for a period of time (e.g., such as the duration of a class period, 2 hours, 3 hours, or any other suitable time period).

In this way, UDN service authorization is streamlined by enabling a user device to automatically initiate a secondary EAP dialogue to access a UDN group in response to a successful primary access authentication. Moreover, by performing secondary EAP dialogue (e.g., secondary authentication) of a user device when switching between UDN groups (and not primary access authentication for the Wi-Fi network), thereby simplifying the UDN workflow and enabling dynamic UDN groups.

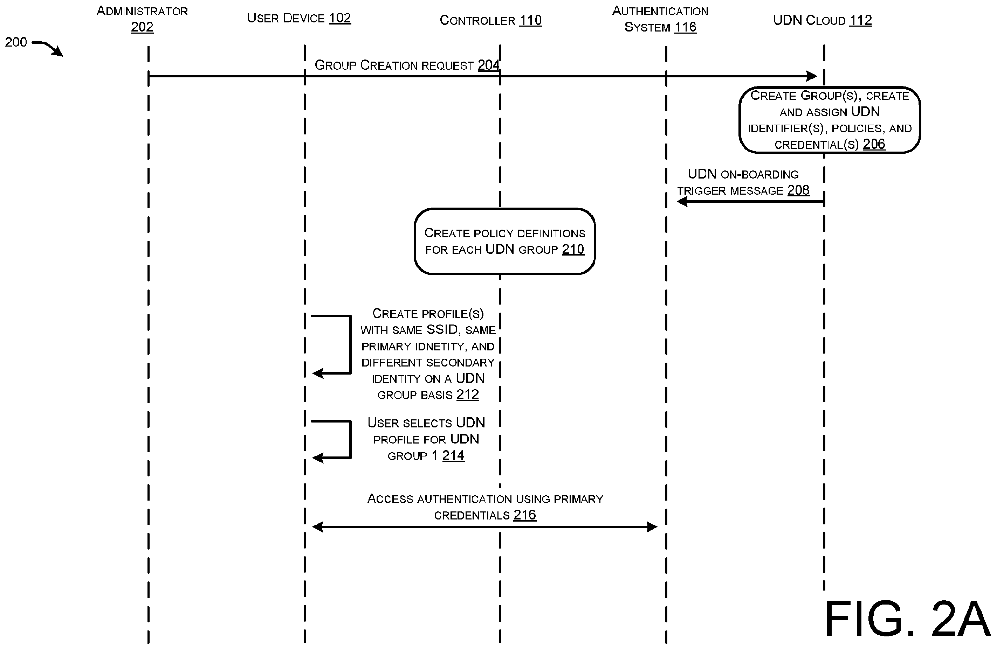

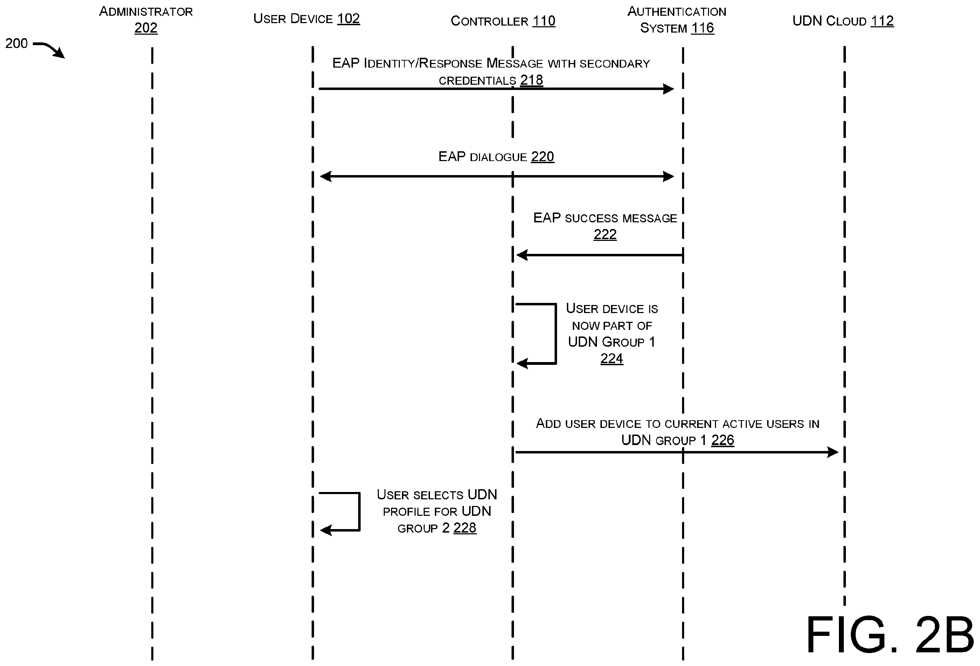

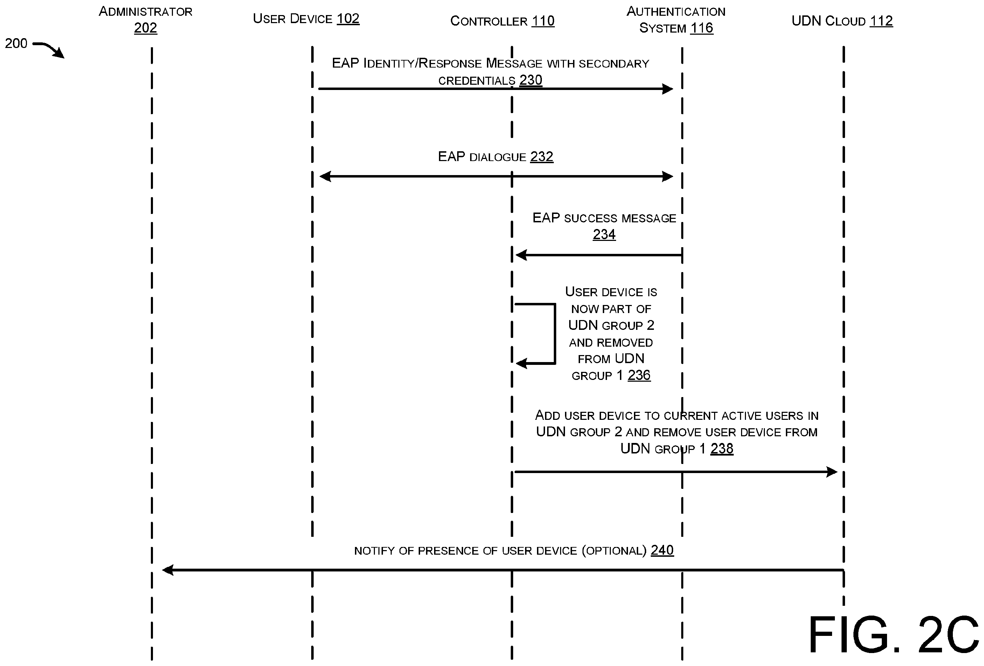

FIGS. 2A-2C illustrates a flow diagram 200 of example communications corresponding to an end user device initiating a secondary EAP dialogue using secondary credentials in order to access a UDN group. For instance, the end user device may correspond to user device 102 described above. In some examples, the user of the user device may correspond to a student attempting to access a wireless network associated with a school. In this example, the UDN groups may be associated with classes and/or classrooms.

As illustrated in FIG. 2A, at 204, an administrator 202 may send a room creation request to the UDN cloud 112. In some examples, the administrator 202 (e.g., school administrator, network administrator, etc.) may access a portal via a computing device and/or user device (e.g., such as via application 104, or another application) in order to create UDN groups within a network 106 of the school. In some examples, the administrator 202 may configure the UDN group(s) to be accessible for specific periods of time. For instance, where a first UDN group corresponds to a class, the first UDN group may be accessible to users for a set period of time, such as the duration of the class period or any other suitable time period.

At 206, the UDN cloud 112 may create the UDN group(s), create and assign UDN group identifier(s), create and assign policies to the UDN group(s), and create and assigned UDN group credential(s). For instance, each UDN group may be associated with a group identifier and/or a group credential (e.g., password, etc.). In some examples, the administrator 202 may identify user(s) associated with each UDN group. For instance, where a UDN group is associated with a class, the administrator may add student(s) to the UDN group. In some examples, each user may be assigned a different credential in order to access the UDN group. In other examples, each user may utilize the same credential associated with the UDN group in order to access the UDN group.

In some examples, the group credentials for accessing each UDN group may be shared with users of each respective UDN group via any out of band approaches (e.g., in person, USB, or any other suitable method of sharing information).

At 208, the UDN cloud 112 may send a UDN on-boarding trigger message to the authentication system 116. For instance, the UDN cloud may push the on-boarding trigger message to the authentication system 116, wherein the on-boarding trigger message comprises one or more identities of end user device(s) and/or UDN identifier(s).

At 210, the controller 110 may create and store policy definitions for each UDN group created at 206. For instance, the controller 110 may store the policy definitions (e.g., such as security policies for accessing the UDN group(s)) in memory.

At 212, the user device 102 may create profile(s) that have the same SSID, same primary identity, and different secondary identity on a UDN group basis. For instance, as noted above, where a network is named "Blizzard" and the user of the user device is associated with two UDN groups, the user device may create and display two profiles: (1) Blizzard-Group1 (SSID=blizzard, primary identity=Joe, secondary identity=UDN-Group-1); and (2) Blizzard-Group2 (SSID=blizzard, primary identity=Joe, secondary identity=UDN-Group-2). In this example, the SSID (e.g., "blizzard") is the same for both UDN groups, the primary identity (e.g., "Joe") is the same for both groups, and the secondary identity (e.g., "UDN-Group-1" and "UDN-Group-2") are different for each UDN group. In addition, each UDN group will be associated with secondary credentials that are different from the primary credentials associated with accessing the network.

At 214, the user device 102 may receive input from a user that indicates a selection of a UDN profile associated with a first UDN group. For instance, the input may indicate a user's selection of the first profile (e.g., Blizzard-Group1) associated with UDN-Group-1.

At 216, the user device 102 may establish a connection with the authentication system 116 and perform access authentication using the primary credentials. For instance, as described above, in response to the user selection of the first profile, the user device may send a request (e.g., such as an EAP identity/request message that includes the primary credentials for accessing the network) to the controller 110 and/or authentication system 116. The user device and authentication system may establish a primary EAP dialogue, using the primary credentials associated with accessing the network (e.g., "blizzard"). Once primary access authentication is completed successfully, the user device 102 may access the network (e.g., "blizzard"). In some examples, the network may comprise a WLAN.

At 218, the user device 102 may send an EAP identity/response message to the authentication system 116. In some examples, the EAP identity/response message may include secondary credentials associated with accessing the selected UDN group (e.g., UDN-Group-1). In some examples, the identity used in the EAP identity/response message is the group identity of the selected UDN group. In this example, the group identity is "UDN-Group-1." In some examples, the EAP identity/response message may additionally include one or more of the UDN group name, UDN group identifier, and/or any other suitable information.

As noted above, in some examples, the authentication system 116 may correspond to an external entity that manages only secondary credentials and/or secondary authentication of the user device. For instance, a first authentication system 116 (e.g., such as an AAA engine) may handle primary access authentication of the user device at 216 and a second authentication system 116 (e.g., such as an external entity), may handle the secondary authentication associated with the UDN group(s).

At 220, the user device 102 and the authentication system 116 establish an EAP dialogue. For instance, the EAP dialogue may comprise a secondary EAP dialogue for completing secondary authentication to access the selected UDN group (e.g., UDN-Group-1).

At 222, the authentication system 116 sends the controller 110 an EAP success message indicating successful authentication of the user device. Where authentication of the user device is unsuccessful, the authentication system 116 may send the controller 110 an EAP unsuccessful message and the controller 110 may deny the user device access to the UDN group. In this example, the user device 102 is still connected to the network (e.g., the WLAN), but may not access the UDN group.

At 224, the controller 110 stores an indication that the user device is now part of UDN-Group-1. In some examples, the controller 110 may grant access to the UDN group to the user device. In some examples, the controller 110 may grant access to the UDN group for a specific period of time. For instance, where a first UDN group corresponds to a class, the UDN-Group-1 may be accessible to the user device 102 for a set period of time, such as the duration of the class period or any other suitable time period. In some examples, the controller 110 may apply the policies created and stored at 210 in order to allow the user device to be included in the private network created for UDN-Group-1.

At 226, the controller 110 sends a message to the UDN cloud 112. In some examples, the message includes instructions for the UDN cloud to add the user device to a current active user in UDN-Group-1. In some examples, the UDN cloud 112 adds the user device to an active list, table, or memory.

At 228, the user may select a second UDN profile for accessing a second UDN group. For instance, the user device may receive second input indicating a selection of Blizzard-Group2. In some examples, the user may select a second profile in response to switching classes (e.g., class 1/UDN-Group-1 to class 2/UDN-Group-2).

At 230, in response to receiving the second input indicating the selection of a second UDN profile, the user device may send an EAP identity/response message to the authentication system 116, where the EAP identity/response message includes secondary credentials associated with the second UDN group. In some examples, the identity used in the EAP identity/response message is the group identity of the selected UDN group. In this example, the group identity is "UDN-Group-2." In some examples, the EAP identity/response message may additionally include one or more of the UDN group name, UDN group identifier, and/or any other suitable information.

At 232, the user device 102 and authentication system 116 establish an EAP dialogue. As noted above, the EAP dialogue may be a secondary EAP dialogue for authenticating the user device to access the second UDN group.

At 234, the authentication system 116 sends the controller 110 an EAP success message. Where authentication of the user device is unsuccessful, the authentication system 116 may send the controller 110 an EAP unsuccessful message and the controller 110 may deny the user device access to the UDN group. In this example, the user device 102 is still connected to the network (e.g., the WLAN), but may not access the UDN group.

At 236, the controller 110 stores an indication that the user device is now part of UDN-Group-2 and removes the user device from UDN-Group-1. In some examples, the controller 110 may grant access to UDN-Group-2 to the user device. In some examples, the controller 110 may grant access to the second UDN group for a specific period of time. For instance, UDN-Group-2 may be accessible to the user device 102 for a set period of time, such as the duration of the class period or any other suitable time period. In some examples, the controller 110 may apply the policies created and stored at 210 in order to allow the user device to be included in the private network created for UDN-Group-2.

At 238, the controller 110 sends a message to the UDN cloud 112. In some examples, the message includes instructions for the UDN cloud to add the user device to a current active user in UDN-Group-2. In some examples, the UDN cloud 112 adds the user device to an active list, table, or memory. The message may also include instructions for the UDN cloud to remove the user device from the current active users in UDN-Group-1.

At 240, the UDN cloud may, optionally, notify the administrator of the presence of the user device 102 in one or more of the UDN groups.

Accordingly, by simply selecting a UDN profile, a user can switch from a first UDN group to a second UDN group with only secondary credentials being verified, thereby streamlining UDN service authorization.

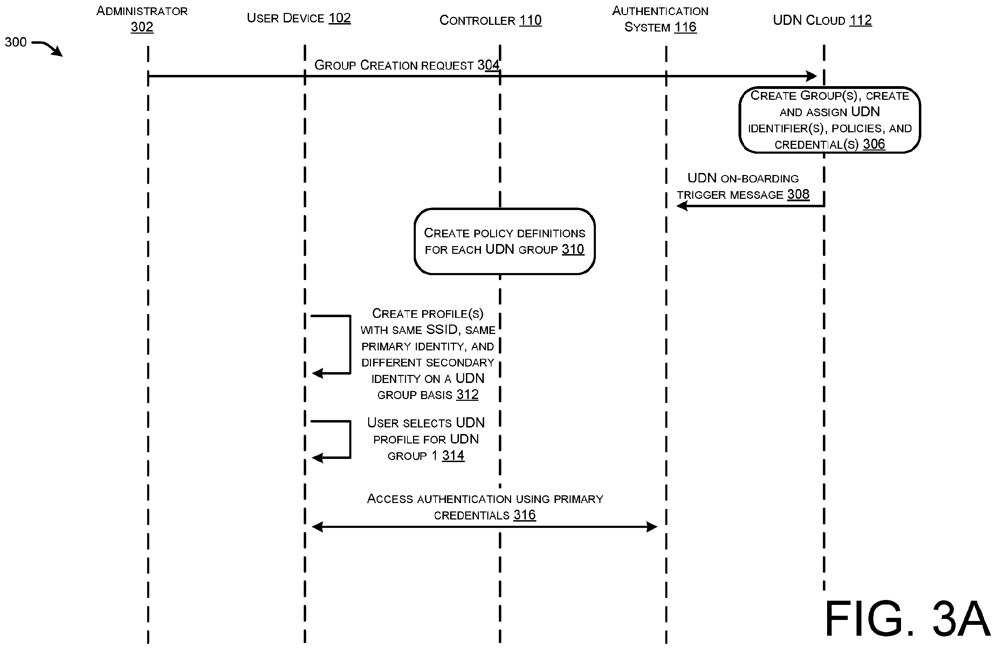

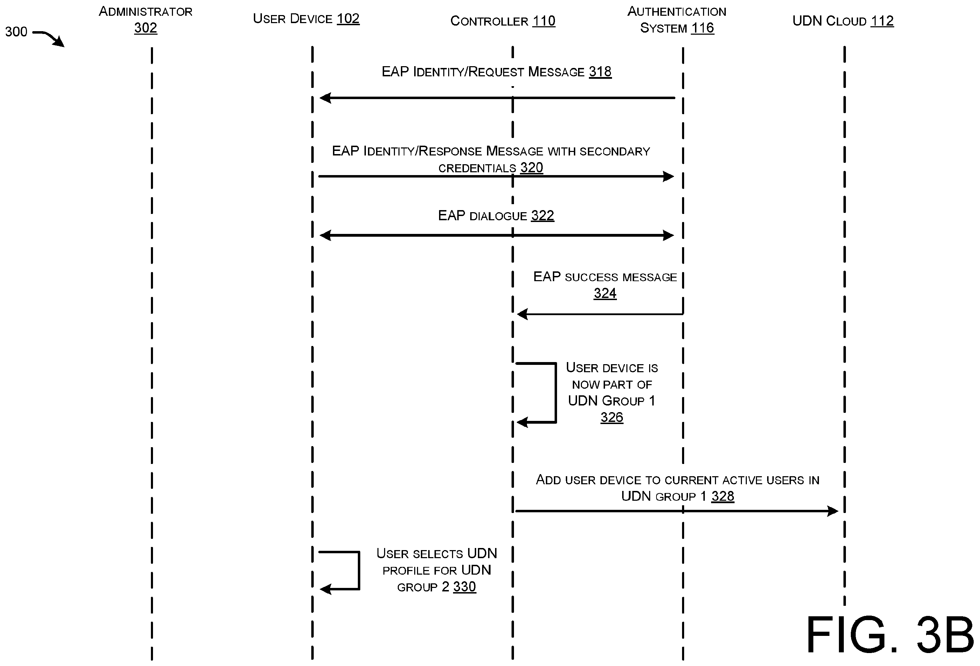

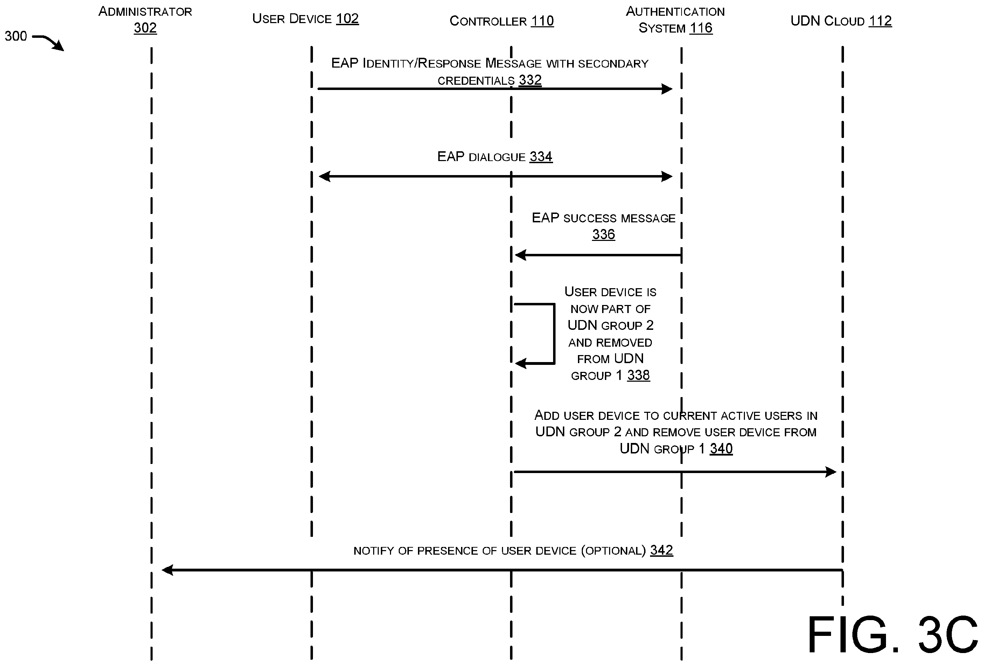

FIGS. 3A-3C illustrate a flow diagram 300 of example communications corresponding to a controller initiating a secondary EAP dialogue with a user device in order to enable the user device to access a UDN group. For instance, the controller may correspond to controller 110 described above. The user device may correspond to user device 102 described above. In some examples, the user of the user device may correspond to a student attempting to access a wireless network (e.g., such as a WLAN) associated with a school. In this example, the UDN groups may be associated with classes and/or classrooms.

As illustrated in FIG. 3A, at 304, an administrator 302 may send a room creation request to the UDN cloud 112. In some examples, the administrator 302 (e.g., school administrator, network administrator, etc.) may access a portal via a computing device and/or user device (e.g., such as via application 104, or another application) in order to create UDN groups within a network 106 of the school. In some examples, the administrator 302 may configure the UDN group(s) to be accessible for specific periods of time. For instance, where a first UDN group corresponds to a class, the first UDN group may be accessible to users for a set period of time, such as the duration of the class period or any other suitable time period.

At 306, the UDN cloud 112 may create the UDN group(s), create and assign UDN group identifier(s), create and assign policies to the UDN group(s), and create and assigned UDN group credential(s). For instance, each UDN group may be associated with a group identifier and/or a group credential (e.g., password, etc.). In some examples, the administrator 302 may identify user(s) associated with each UDN group. For instance, where a UDN group is associated with a class, the administrator may add student(s) to the UDN group. In some examples, each user may be assigned a different credential in order to access the UDN group. In other examples, each user may utilize the same credential associated with the UDN group in order to access the UDN group.

In some examples, the group credentials for accessing each UDN group may be shared with users of each respective UDN group via any out of band approaches (e.g., in person, USB, or any other suitable method of sharing information).

At 308, the UDN cloud 112 may send a UDN on-boarding trigger message to the authentication system 116. For instance, the UDN cloud may push the on-boarding trigger message to the authentication system 116, wherein the on-boarding trigger message comprises one or more identities of end user device(s) and/or UDN identifier(s).

At 310, the controller 110 may create and store policy definitions for each UDN group created at 306. For instance, the controller 110 may store the policy definitions (e.g., such as security policies for accessing the UDN group(s)) in memory.

At 312, the user device 102 may create profile(s) that have the same SSID, same primary identity, and different secondary identity on a UDN group basis. For instance, as noted above, where a network is named "Blizzard" and the user of the user device is associated with two UDN groups, the user device may create and display two profiles: (1) Blizzard-Group1 (SSID=blizzard, primary identity=Joe, secondary identity=UDN-Group-1); and (2) Blizzard-Group2 (SSID=blizzard, primary identity=Joe, secondary identity=UDN-Group-2). In this example, the SSID (e.g., "blizzard") is the same for both UDN groups, the primary identity (e.g., "Joe") is the same for both groups, and the secondary identity (e.g., "UDN-Group-1" and "UDN-Group-2") are different for each UDN group. In addition, each UDN group will be associated with secondary credentials that are different from the primary credentials associated with accessing the network.

At 314, the user device 102 may receive input from a user that indicates a selection of a UDN profile associated with a first UDN group. For instance, the input may indicate a user's selection of the first profile (e.g., Blizzard-Group 1) associated with UDN-Group-1.

At 316, the user device 102 may establish a connection with the authentication system 116 and perform access authentication using the primary credentials. For instance, as described above, in response to the user selection of the first profile, the user device may send a request (e.g., such as an EAP identity/request message that includes the primary credentials for accessing the network) to the controller 110 and/or authentication system 116. The user device and authentication system may establish a primary EAP dialogue, using the primary credentials associated with accessing the network (e.g., "blizzard"). Once primary access authentication is completed successfully, the user device 102 may access the network (e.g., "blizzard"). In some examples, the network may comprise a WLAN.

At 318, the authentication system 116 may send an EAP identity/request message to the user device 102. For instance, the authentication system 116 may, in response to successfully authenticating access to the network, identify the user device as being included in one or more UDN groups. In response, the authentication system 116 may send an EAP identity/request message to the user device, to see if the user wants to access one or more UDN profile(s). In some examples, the EAP identity request message may include a UDN group identifier associated with the UDN group (e.g., such as the first UDN group associated with the first profile selected by the user).

At 320, the user device 102 may send an EAP identity/response message to the authentication system 116. In some examples, the EAP identity/response message may include secondary credentials associated with accessing the selected UDN group (e.g., UDN-Group-1). In some examples, the identity used in the EAP identity/response message is the group identity of the selected UDN group. In this example, the group identity is "UDN-Group-1." In some examples, the EAP identity/response message may additionally include one or more of the UDN group name, UDN group identifier, and/or any other suitable information.

As noted above, in some examples, the authentication system 116 may correspond to multiple authentication systems. For instance, a first authentication system 116 (e.g., such as an AAA engine) may handle primary access authentication of the user device at 316 and a second authentication system 116 (e.g., such as an external entity), may handle the secondary authentication associated with the UDN group(s).

At 322, the user device 102 and the authentication system 116 establish an EAP dialogue. For instance, the EAP dialogue may comprise a secondary EAP dialogue for completing secondary authentication to access the selected UDN group (e.g., UDN-Group-1).

At 324, the authentication system 116 sends the controller 110 an EAP success message indicating successful authentication of the user device. Where authentication of the user device is unsuccessful, the authentication system 116 may send the controller 110 an EAP unsuccessful message and the controller 110 may deny the user device access to the UDN group. In this example, the user device 102 is still connected to the network (e.g., the WLAN), but may not access the UDN group.

At 326, the controller 110 stores an indication that the user device is now part of UDN-Group-1. In some examples, the controller 110 may grant access to the UDN group to the user device. In some examples, the controller 110 may grant access to the UDN group for a specific period of time. For instance, where a first UDN group corresponds to a class, the UDN-Group-1 may be accessible to the user device 102 for a set period of time, such as the duration of the class period or any other suitable time period. In some examples, the controller 110 may apply the policies created and stored at 310 in order to allow the user device to be included in the private network created for UDN-Group-1.

At 328, the controller 110 sends a message to the UDN cloud 112. In some examples, the message includes instructions for the UDN cloud to add the user device to a current active user in UDN-Group-1. In some examples, the UDN cloud 112 adds the user device to an active list, table, or memory.

At 330, the user may select a second UDN profile for accessing a second UDN group. For instance, the user device may receive second input indicating a selection of Blizzard-Group2. In some examples, the user may select a second profile in response to switching classes (e.g., class 1/UDN-Group-1 to class 2/UDN-Group-2).

At 332, in response to receiving the second input indicating the selection of a second UDN profile, the user device may send an EAP identity/response message to the authentication system 116, where the EAP identity/response message includes secondary credentials associated with the second UDN group. In some examples, the identity used in the EAP identity/response message is the group identity of the selected UDN group. In this example, the group identity is "UDN-Group-2." In some examples, the EAP identity/response message may additionally include one or more of the UDN group name, UDN group identifier, and/or any other suitable information.

At 334, the user device 102 and authentication system 116 establish an EAP dialogue. As noted above, the EAP dialogue may be a secondary EAP dialogue for authenticating the user device to access the second UDN group.

At 336, the authentication system 116 sends the controller 110 an EAP success message. Where authentication of the user device is unsuccessful, the authentication system 116 may send the controller 110 an EAP unsuccessful message and the controller 110 may deny the user device access to the UDN group. In this example, the user device 102 is still connected to the network (e.g., the WLAN), but may not access the UDN group.

At 338, the controller 110 stores an indication that the user device is now part of UDN-Group-2 and removes the user device from UDN-Group-1. In some examples, the controller 110 may grant access to UDN-Group-2 to the user device. In some examples, the controller 110 may grant access to the second UDN group for a specific period of time. For instance, UDN-Group-2 may be accessible to the user device 102 for a set period of time, such as the duration of the class period or any other suitable time period. In some examples, the controller 110 may apply the policies created and stored at 310 in order to allow the user device to be included in the private network created for UDN-Group-2.

At 340, the controller 110 sends a message to the UDN cloud 112. In some examples, the message includes instructions for the UDN cloud to add the user device to a current active user in UDN-Group-2. In some examples, the UDN cloud 112 adds the user device to an active list, table, or memory. The message may also include instructions for the UDN cloud to remove the user device from the current active users in UDN-Group-1.

At 342, the UDN cloud may, optionally, notify the administrator of the presence of the user device 102 in one or more of the UDN groups.

Accordingly, by simply selecting a UDN profile, a user can switch from a first UDN group to a second UDN group with only secondary credentials being verified, thereby streamlining UDN service authorization.

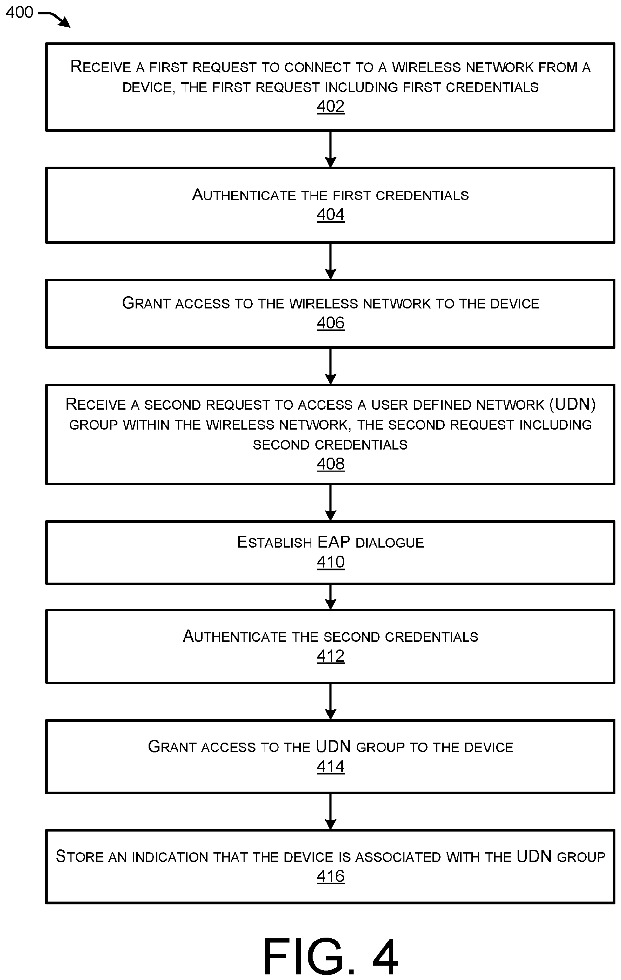

FIG. 4 illustrates a flow diagram of an example method 400 for a system to perform UDN service authorization based on secondary identity credentials. In some instances, the techniques may be performed by a system (e.g., one or more devices), such as the controller 110, network device 108, UDN cloud 112, authentication system(s) 116, a combination thereof, and/or any other devices (e.g., hardware offload chips and/or any other device). The techniques of method 400 may be performed by a system that includes one processor, or more than one processor.

At 402, the system may receive a first request to connect to a network from a device, the first request including first credentials. For instance, the first credentials may comprise primary credentials for accessing a wireless network (e.g., such as a WLAN), as described above.

At 404, the system may authenticate the first credentials. For instance, the system may authenticate the first credentials via an AAA engine or other authentication system as described above.

At 406, the system may grant access to the wireless network to the device.

At 408, the system may receive a second request to access a user defined network (UDN) group within the wireless network, the second request including second credentials. In some examples, the UDN group is associated with a first profile of a user of the device, such as the UDN profiles described above. In some examples, the second credentials may comprise at least one of an identifier associated with the UDN group, a username (e.g., identifier of the user and/or user device), and/or a password associated with the UDN group. In some examples, the second credentials may comprise a decorated network access identifier (NAI) (e.g., where the UDN group identifier is incorporated into the NAI) or other explicit field.

In some examples, the system may receive the second request from the device in response to granting access to the network. In this example, the second request may correspond to an EAP identity/response message, as described above. In other examples, the system may send, to the device, and in response to authenticating the first credentials, a request for secondary credentials associated with the UDN group. As noted above, in this example, the request may comprise an EAP identity/request message. In this example, the system may receive from the device a message (e.g., an EAP identity/response message) including the second credentials and a secondary EAP dialogue may then be established.

At 410, the system may establish an EAP dialogue. For instance, as described above the system may establish an EAP dialogue between the device and the network (e.g., a controller, authentication system, etc.). As noted above, the EAP dialogue may correspond to a secondary EAP dialogue.

At 412, the system may authenticate the second credentials. For instance, the system may authenticate the second credentials via an AAA engine or other authentication service. In some examples, the system may authenticate the second credentials using a third-party authentication system.

At 414, the system may grant access to the UDN group to the device. For instance, the device may be enabled to access the UDN group. As noted above, the system may grant access to the UDN group for a period of time.

At 416, the system may store an indication that the device is associated with the UDN group. As noted above, the system may store one or more dynamic list(s), table(s), etc., in memory to track active users associated with a UDN group.

In some examples, the system may receive, from the device, a third request to connect to a second UDN group within the wireless network, the third request including third credentials associated with the second UDN group. In some examples, the third request may correspond to a user selecting a second UDN profile associated with the second UDN group. The system may establish, in response to the third request, a secondary EAP dialogue with the device and authenticate the third credentials associated with the second UDN group as described above. The system may, in response to authenticating the device, grant access to the second UDN group to the device, update the first list to remove the device from the first UDN group, and store an indication that the device is associated with the second UDN group in a second list associated with the second UDN group.

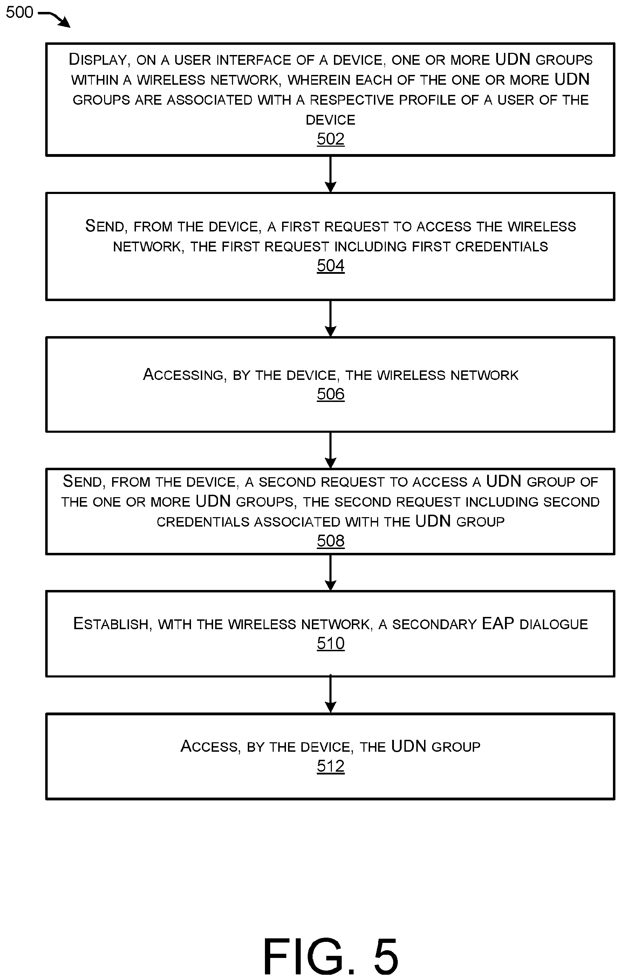

FIG 5 illustrates a flow diagram of an example method 500 for a device to perform UDN service authorization based on secondary identity credentials. In some instances, the steps of method 500 may be performed by a device (e.g., user device 102) that includes one or more processors and one or more non-transitory computer-readable media storing computer-executable instructions that, when executed by the one or more processors, cause the one or more processors to perform operations of method 500.

At 502, the device may display, on a user interface of the device, one or more UDN groups within a wireless network, wherein each of the one or more UDN groups are associated with a respective profile of a user of the device.

In some examples and, as noted above, the device may create one or more profiles (e.g., UDN profiles) associated with one or more UDN group(s). As noted above, each profile may comprise a same primary identifier (e.g., such as the SSID), and may comprise unique respective secondary identifier(s).

At 504, the device may send, from the device, a first request to access the wireless network, the first request including first credentials. In some examples, the first request is sent to the network in response to user input indicating a selection of a first profile associated with a UDN group of the one or more UDN groups.

At 506, the device may access the wireless network. For instance, in response to the primary access authentication, the device may access the wireless network (e.g., WLAN, etc.).

At 508, the device may send a second request to access a UDN group of the one or more UDN groups, the second request including second credentials associated with the UDN group. In some examples, the first request and/or second request is sent in response to user input selecting a profile associated with the UDN group.

At 510, the device may establish with the wireless network, a secondary EAP dialogue. For instance, as noted above, the device may establish the secondary EAP dialogue with a controller and/or authentication system.

At 512, the device may access the UDN group. For instance, the device may access the UDN group in response to the second credentials being authenticated by the network As noted above, the device may access the UDN group for a period of time.

In some examples, the device may send a third request to access a second UDN group of the one or more UDN groups, wherein the third request comprises third credentials associated with accessing the second UDN group. For instance, the third request may be sent in response to user input indicating a selection of a second profile associated with the second UDN group. IN this example. the device is switching between UDN groups. The device may establish a secondary EAP dialogue with the network in order to authenticate the third credentials. In response to the third credentials being authenticated by the network, the device may access the second UDN group. As noted above, the device may access the second UDN group for a period of time.

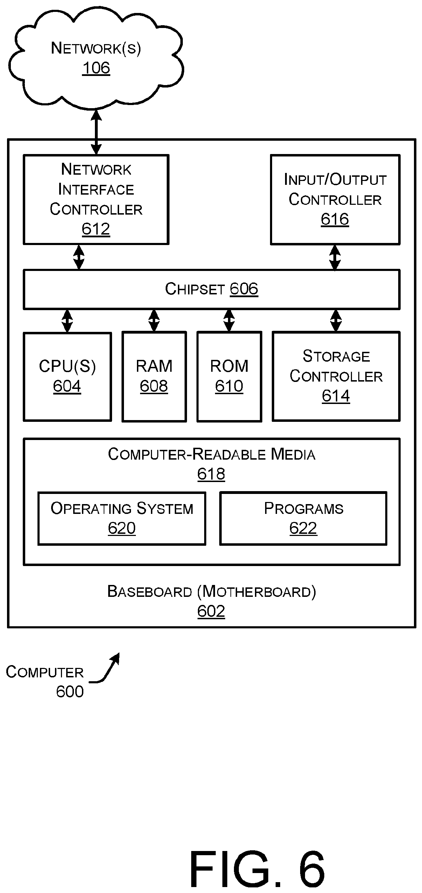

FIG. 6 shows an example computer architecture for a device capable of executing program components for implementing the functionality described above. The computer architecture shown in FIG. 6 illustrates any type of computer 600, such as a conventional server computer, workstation, desktop computer, laptop, tablet, network appliance, e-reader, smartphone, or other computing device, and can be utilized to execute any of the software components presented herein. The computer may, in some examples, correspond to a controller 110, network device 108, UDN cloud 112, authentication system(s) 116, and/or any other device described herein, and may comprise personal devices (e.g., smartphones, tables, wearable devices, laptop devices, etc.) networked devices such as servers, switches, routers, hubs, bridges, gateways, modems, repeaters, access points, and/or any other type of computing device that may be running any type of software and/or virtualization technology.

The computer 600 includes a baseboard 602, or "motherboard," which is a printed circuit board to which a multitude of components or devices can be connected by way of a system bus or other electrical communication paths. In one illustrative configuration, one or more central processing units ("CPUs") 604 operate in conjunction with a chipset 606. The CPUs 604 can be standard programmable processors that perform arithmetic and logical operations necessary for the operation of the computer 600.

The CPUs 604 perform operations by transitioning from one discrete, physical state to the next through the manipulation of switching elements that differentiate between and change these states. Switching elements generally include electronic circuits that maintain one of two binary states, such as flip-flops, and electronic circuits that provide an output state based on the logical combination of the states of one or more other switching elements, such as logic gates. These basic switching elements can be combined to create more complex logic circuits, including registers, adders-subtractors, arithmetic logic units, floating-point units, and the like.

The chipset 606 provides an interface between the CPUs 604 and the remainder of the components and devices on the baseboard 602. The chipset 606 can provide an interface to a RAM 608, used as the main memory in the computer 600. The chipset 606 can further provide an interface to a computer-readable storage medium such as a read-only memory ("ROM") 610 or non-volatile RAM ("NVRAM") for storing basic routines that help to startup the computer 600 and to transfer information between the various components and devices. The ROM 610 or NVRAM can also store other software components necessary for the operation of the computer 600 in accordance with the configurations described herein.

The computer 600 can operate in a networked environment using logical connections to remote computing devices and computer systems through a network, such as network(s) 106. The chipset 606 can include functionality for providing network connectivity through a NIC 612, such as a gigabit Ethernet adapter. The NIC 612 is capable of connecting the computer 600 to other computing devices over the network(s) 106. It should be appreciated that multiple NICs 612 can be present in the computer 600, connecting the computer to other types of networks and remote computer systems.

The computer 600 can be connected to a storage device 618 that provides non-volatile storage for the computer. The storage device 618 can store an operating system 620, programs 622, and data, which have been described in greater detail herein. The storage device 618 can be connected to the computer 600 through a storage controller 614 connected to the chipset 606. The storage device 618 can consist of one or more physical storage units. The storage controller 614 can interface with the physical storage units through a serial attached SCSI ("SAS") interface, a serial advanced technology attachment ("SATA") interface, a fiber channel ("FC") interface, or other type of interface for physically connecting and transferring data between computers and physical storage units.

The computer 600 can store data on the storage device 618 by transforming the physical state of the physical storage units to reflect the information being stored. The specific transformation of physical state can depend on various factors, in different embodiments of this description. Examples of such factors can include, but are not limited to, the technology used to implement the physical storage units, whether the storage device 618 is characterized as primary or secondary storage, and the like.

For example, the computer 600 can store information to the storage device 618 by issuing instructions through the storage controller 614 to alter the magnetic characteristics of a particular location within a magnetic disk drive unit. the reflective or refractive characteristics of a particular location in an optical storage unit, or the electrical characteristics of a particular capacitor, transistor, or other discrete component in a solid-state storage unit. Other transformations of physical media are possible with the foregoing examples provided only to facilitate this description. The computer 600 can further read information from the storage device 618 by detecting the physical states or characteristics of one or more particular locations within the physical storage units.

In addition to the mass storage device 618 described above, the computer 600 can have access to other computer-readable storage media to store and retrieve information, such as program modules, data structures, or other data. It should be appreciated by those skilled in the art that computer-readable storage media is any available media that provides for the non-transitory storage of data and that can be accessed by the computer 600. In some examples, the operations performed by the controller 110, network device 108, UDN cloud 112, authentication system(s) 116, and/or any components included therein, may be supported by one or more devices similar to computer 600. Stated otherwise, some or all of the operations performed by the controller **110,** network device 108, UDN cloud 112, authentication system(s) 116, and or any components included therein, may be performed by one or more computer devices 600.

By way of example, and not limitation, computer-readable storage media can include volatile and non-volatile, removable and non-removable media implemented in any method or technology. Computer-readable storage media includes, but is not limited to, RAM, ROM, erasable programmable ROM ("EPROM"), electrically-erasable programmable ROM ("EEPROM"), flash memory or other solid-state memory technology, compact disc ROM ("CD-ROM"), digital versatile disk ("DVD"), high definition DVD ("HD-DVD"), BLU-RAY, or other optical storage, magnetic cassettes, magnetic tape, magnetic disk storage or other magnetic storage devices, or any other medium that can be used to store the desired information in a non-transitory fashion.

As mentioned briefly above, the storage device 618 can store an operating system 620 utilized to control the operation of the computer 600. According to one embodiment, the operating system comprises the LINUX operating system. According to another embodiment, the operating system comprises the WINDOWS^{®} SERVER operating system from MICROSOFT Corporation of Redmond, Washington. According to further embodiments, the operating system can comprise the UNIX operating system or one of its variants. It should be appreciated that other operating systems can also be utilized. The storage device 618 can store other system or application programs and data utilized by the computer 600.

In one embodiment, the storage device 618 or other computer-readable storage media is encoded with computer-executable instructions which, when loaded into the computer 600, transform the computer from a general-purpose computing system into a special-purpose computer capable of implementing the embodiments described herein. These computer-executable instructions transform the computer 600 by specifying how the CPUs 604 transition between states, as described above. According to one embodiment, the computer 600 has access to computer-readable storage media storing computer-executable instructions which, when executed by the computer 600, perform the various processes described above with regard to FIGS. 1-5. The computer 600 can also include computer-readable storage media having instructions stored thereupon for performing any of the other computer-implemented operations described herein.

The computer 600 can also include one or more input/output controllers 616 for receiving and processing input from a number of input devices, such as a keyboard, a mouse, a touchpad, a touch screen, an electronic stylus, or other type of input device. Similarly, an input/output controller 616 can provide output to a display, such as a computer monitor, a flat-panel display, a digital projector, a printer, or other type of output device. It will be appreciated that the computer 600 might not include all of the components shown in FIG. 6, can include other components that are not explicitly shown in FIG. 6, or might utilize an architecture completely different than that shown in FIG. 6.

As described herein, the computer 600 may comprise one or more of a controller 110, network device 108, UDN cloud 112, authentication system(s) 116, and/or any other device. The computer 600 may include one or more hardware processors 604 (processors) configured to execute one or more stored instructions. The processor(s) 604 may comprise one or more cores. Further, the computer 600 may include one or more network interfaces configured to provide communications between the computer 600 and other devices, such as the communications described herein as being performed by the controller 110, network device 108, UDN cloud 112, authentication system(s) 116, and/or any other device. The network interfaces may include devices configured to couple to personal area networks (PANs), user defined networks (UDNs), wired and wireless local area networks (LANs), wired and wireless wide area networks (WANs), and so forth. For example, the network interfaces may include devices compatible with Ethernet, Wi-Fi^{™}, and so forth.

The programs 622 may comprise any type of programs or processes to perform the techniques described in this disclosure for performing UDN service authorization based on secondary identity credentials. For instance, the programs 622 may cause the computer 600 to perform techniques including receiving a first request to connect to the wireless network from a device of a user, the first request including first credentials; authenticating the first credentials; granting access to wireless network to the device; receiving, from the device, a second request to connect to a first user defined network (UDN) group within the wireless network, the second request including second credentials associated with the first UDN group; establishing, in response to the second request, a secondary EAP dialogue with the device; authenticating the second credentials associated with the first UDN group; granting access to the first UDN group to the device; and storing an indication that the device is associated with the first UDN group in a first list associated with the first UDN group.

Additionally, or alternatively the programs 622 may cause the computer 600 to perform techniques including: displaying, on a user interface of the device, one or more UDN groups within a wireless network, wherein each of the one or more UDN groups are associated with a respective profile of a user of the device; sending, from the device, a first request to access the wireless network, the first request including first credentials; accessing, by the device, the wireless network; sending, from the device, a second request to access a first UDN group of the one or more UDN groups, wherein the second request comprises second credentials associated with accessing the first UDN group; establishing, with the wireless network, a secondary EAP dialogue; and accessing, by the device, the first UDN group.

In this way, an end user may access a UDN group using secondary authentication that is exclusive to the UDN group. Accordingly, UDN service authorization is streamlined by eliminating the need to manually configure a user each time the user accesses a UDN group. Moreover, when a user switches between UDN groups, the user device is only required to perform secondary authentication for the UDN group (and not primary access authentication for the Wi-Fi network), thereby simplifying the UDN workflow and enabling dynamic UDN groups. Additionally, by providing multiple SSID profiles for the same SSID, with secondary identities specific to UDN groups, the current techniques eliminate the need to rely on MAC addresses as device identifiers.

In summary, this disclosure describes techniques and mechanisms for performing user defined network (UDN) service authorization based on secondary identity credentials within a wireless network. For instance, the techniques may include receiving, from a user device, a first request to access a wireless network (e.g., such as a WLAN), where the first request may include primary access credentials for accessing the WLAN. Once primary access authentication of the user device is complete, the techniques may include receiving a second request from the user device to access a UDN group within the wireless network. The second request can include secondary credentials for accessing the UDN group. In response to the second request, a secondary EAP dialogue may be established to authenticate the user device using the secondary credentials. Once the secondary credentials are authenticated, the techniques may include granting the user device access to the UDN group.

While the invention is described with respect to the specific examples, it is to be understood that the scope of the invention is not limited to these specific examples. Since other modifications and changes varied to fit particular operating requirements and environments will be apparent to those skilled in the art, the invention is not considered limited to the example chosen for purposes of disclosure, and is defined by the appended claims.

Although the application describes embodiments having specific structural features and/or methodological acts, the specific features and acts are merely illustrative of some embodiments that fall within the scope of the claims of the application.

## Claims

1. A method implemented by a controller (110) of a wireless network (106), the method comprising:
receiving a first request (216) to connect to the wireless network from a device of a user (102), the first request including first credentials (402);
authenticating the first credentials (404);
granting access to the wireless network to the device in response to authentication of the first credentials (406);
receiving, from the device, a second request (218) to connect to a first user defined network, UDN, group within the wireless network, the second request including second credentials associated with the first UDN group (408), wherein the second credentials are different from the first credentials;
establishing, in response to the second request, a secondary EAP dialogue (220) with the device (410), wherein:
the secondary EAP dialogue includes receiving, from the device, the second credentials;
the second credentials were obtained by the device in an out-of-band process between the device and a UDN cloud (112); and
the second credentials do not include a Media Access Controller, MAC, address; authenticating the second credentials associated with the first UDN group (412); in response to authentication of the second credentials, if the authentication of the second credentials is successful (222):
granting access to the first UDN group to the device (414); and
instructing the UDN cloud (112) to store an indication that the device is associated with the first UDN group in a first list associated with the first UDN group (226, 416),
or, if the authentication of the second credentials is not successful denying access to the first UDN group to the device; and
continuing to allow the device access to the wireless network.

2. The method of claim 1, further comprising:
receiving, from the device (102), a third request (230) to connect to a second UDN group within the wireless network (106), the third request including third credentials associated with the second UDN group, wherein the third credentials are different from the first credentials;
establishing, in response to the third request, an additional secondary EAP dialogue (232) with the device, wherein:
the additional secondary EAP dialogue includes receiving, from the device, the third credentials;
the third credentials were obtained by the device in an out-of-band process between the device and a UDN cloud; and
the third credentials do not include a Media Access Controller, MAC, address; authenticating the third credentials associated with the second UDN group;
in response to authentication of the third credentials, if the authentication of the third credentials is successful (234):
granting access to the second UDN group to the device (236); and
instructing the UDN cloud (112) to:
update the first list to remove the device from the first UDN group (238); and
store an indication that the device is associated with the second UDN group in a second list associated with the second UDN group (238),
or, if the authentication of the third credentials is not successful, denying access to the second UDN group to the device; and
continuing to allow the device access to the wireless network.

3. The method of claim 2, wherein the wireless network (106) comprises a plurality of UDN groups, including the first UDN group and the second UDN group, each respective UDN group being associated with a respective profile of the user.

4. The method of any of claims 1 to 3, wherein the second credentials comprise at least one of an identifier associated with the first UDN group or a username and password associated with the first UDN group.

5. The method of any of claims 1 to 4, wherein the first credentials are authenticated by an authentication service (116) associated with the wireless network (106) and the second credentials are authenticated by one of the authentication service or a third-party authentication service.

6. The method of any of claims 1 to 5, wherein the second credentials comprise a decorated network access identifier.

7. The method of any of claims 1 to 6, wherein the secondary EAP dialogue (220) may comprise an identifier associated with the first UDN group.

8. The method of any of claims 1 to 7, further comprising:
sending, to the device (102) and in response to authenticating the first credentials, a request for secondary credentials, the request including an identifier associated with the first UDN group;
receiving, from the device, a message including the second credentials; and
establishing, in response to receiving the second credentials, the secondary EAP dialogue with the device.

9. A method comprising:
displaying, on a user interface of a device (102), one or more user defined network, UDN, groups within a wireless network (106), wherein each of the one or more UDN groups are associated with a respective profile of a user of the device;
sending, from the device, a first request (216) to access the wireless network, the first request including first credentials;
in response to being granted access to the wireless network, accessing, by the device, the wireless network;
sending, from the device, a second request (218) to access a first UDN group of the one or more UDN groups, wherein the second request comprises second credentials associated with accessing the first UDN group, further wherein the second credentials are different from the first credentials;
establishing, with the wireless network, a secondary EAP dialogue (220) wherein:
the secondary EAP dialogue includes sending, from the device, the second credentials;
the second credentials were obtained by the device in an out-of-band process between the device and a UDN cloud (112); and
the second credentials do not include a Media Access Controller, MAC, address,
subject to being granted access to the first UDN group by the controller (110) of the wireless network, accessing, by the device, the first UDN group; and
the device continuing to access the wireless network.

10. The method of claim 9, further comprising:
creating, by the device (102), a first profile associated with the first UDN group and a second profile associated with a second UDN group, wherein the first profile and the second profile comprise a same primary identifier, and wherein the first profile comprises a secondary identifier that is different from a secondary identifier of the second profile.

11. The method of claim 9 or 10, wherein the second request (218) is sent in response to receiving user input selecting a first profile associated with the first UDN group.

12. The method of any of claims 9 to 11, further comprising:
sending, from the device (102), a third request (230) to access a second UDN group of the one or more UDN groups, wherein the third request comprises third credentials associated with accessing the second UDN group;
establishing, with the wireless network (106), an additional secondary EAP dialogue (232), wherein:
the additional secondary EAP dialogue includes receiving, from the device, the third credentials;
the third credentials were obtained by the device in an out-of-band process between the device and a UDN cloud (112); and
the third credentials do not include a Media Access Controller, MAC, address; and
subject to being granted access to the second UDN group by the controller (110) of the wireless network, accessing, by the device, the second UDN group; and
the device continuing to access the wireless network.

13. Apparatus comprising a controller (110) of a wireless network (106), the apparatus comprising:
means for receiving a first request (216) to connect to the wireless network from a device of a user (102), the first request including first credentials;
means for authenticating the first credentials (116);
means for granting access to the wireless network to the device in response to authentication of the first credentials;
means for receiving, from the device, a second request (218) to connect to a first user defined network, UDN, group within the wireless network, the second request including second credentials associated with the first UDN group, wherein the second credentials are different from the first credentials;
means for establishing, in response to the second request, a secondary EAP dialogue (220) with the device, wherein:
the secondary EAP dialogue includes receiving, from the device, the second credentials;
the second credentials were obtained by the device in an out-of-band process between the device and a UDN cloud (112); and
the second credentials do not include a Media Access Controller, MAC, address;
means for authenticating the second credentials associated with the first UDN group (116);
means for, in response to authentication of the second credentials, if the authentication of the second credentials is successful (222):
granting access to the first UDN group to the device;
instructing the UDN cloud (112) to store an indication that the device is associated with the first UDN group in a first list associated with the first UDN group (226),
or, if the authentication of the second credentials is not successful denying access to the first UDN group to the device; and
means for continuing to allow the device access to the wireless network,
the apparatus optionally further comprising means for implementing the method according to any of claims 2 to 8.

14. Apparatus comprising:
means for displaying, on a user interface of a device (102), one or more user defined network, UDN, groups within a wireless network (106), wherein each of the one or more UDN groups are associated with a respective profile of a user of the device;
means for sending, from the device, a first request (216) to access the wireless network, the first request including first credentials;
means for, in response to being granted access to the wireless network, accessing, by the device, the wireless network;
means for sending, from the device, a second request (218) to access a first UDN group of the one or more UDN groups, wherein the second request comprises second credentials associated with accessing the first UDN group, further wherein the second credentials are different from the first credentials;
means for establishing, with the wireless network, a secondary EAP dialogue (220) wherein:
the secondary EAP dialogue includes sending, from the device, the second credentials;
the second credentials were obtained by the device in an out-of-band process between the device and a UDN cloud (112); and
the second credentials do not include a Media Access Controller, MAC, address,
means for, subject to being granted access to the first UDN group by the controller (110) of the wireless network, accessing, by the device, the first UDN group; and
means for the device continuing to access the wireless network,
the apparatus optionally further comprising means for implementing the method according to any of claims 10 to 12.

15. A computer program, computer program product or computer readable medium comprising instructions which, when executed by a computer, cause the computer to carry out the steps of the method of any of claims 1 to 12.

## Patentansprüche

1. Verfahren, das von einem Controller (110) eines drahtlosen Netzwerks (106) implementiert wird, wobei das Verfahren umfasst:
Empfangen einer ersten Anforderung (216) zum Verbinden mit dem drahtlosen Netzwerk von einer Vorrichtung eines Benutzers (102), wobei die erste Anforderung erste Berechtigungen einschließt (402);
Authentifizieren der ersten Berechtigungen (404);
Gewähren von Zugriff auf das drahtlose Netzwerk für die Vorrichtung als Reaktion auf eine Authentifizierung der ersten Berechtigungen (406);
Empfangen einer zweiten Anforderung (218) zum Verbinden mit einer ersten benutzerdefinierten Netzwerkgruppe, UDN-Gruppe, innerhalb des drahtlosen Netzwerks von der Vorrichtung, wobei die zweite Anforderung zweite Berechtigungen einschließt, die mit der ersten UDN-Gruppe assoziiert sind (408), wobei sich die zweiten Berechtigungen von den ersten Berechtigungen unterscheiden;
Erstellen eines sekundären EAP-Dialogs (220) mit der Vorrichtung als Reaktion auf die zweite Anforderung (410), wobei:
der sekundäre EAP-Dialog ein Empfangen der zweiten Berechtigungen von der Vorrichtung einschließt;
die zweiten Berechtigungen von der Vorrichtung in einem Out-of-Band-Prozess zwischen der Vorrichtung und einer UDN-Cloud (112) bezogen wurden; und
die zweiten Berechtigungen keine Media-Access-Controller-Adresse, MAC-Adresse, einschließen;
Authentifizieren der zweiten Berechtigungen, die mit der ersten UDN-Gruppe assoziiert sind (412);
als Reaktion auf die Authentifizierung der zweiten Berechtigungen, wenn die Authentifizierung der zweiten Berechtigungen erfolgreich ist (222):
Gewähren von Zugriff auf die erste UDN-Gruppe für die Vorrichtung (414); und
Anweisen der UDN-Cloud (112), eine Angabe, dass die Vorrichtung mit der ersten UDN-Gruppe assoziiert ist, in einer ersten Liste, die mit der ersten UDN-Gruppe assoziiert ist, zu speichern (226, 416),
oder wenn die Authentifizierung der zweiten Berechtigungen nicht erfolgreich ist, Verweigern von Zugriff auf die erste UDN-Gruppe für die Vorrichtung; und
Fortsetzen des Zulassens von Zugriff auf das drahtlose Netzwerk für die Vorrichtung.

2. Verfahren nach Anspruch 1, ferner umfassend:
Empfangen einer dritten Anforderung (230) zum Verbinden mit einer zweiten UDN-Gruppe innerhalb des drahtlosen Netzwerks (106) von der Vorrichtung (102), wobei die dritte Anforderung dritte Berechtigungen einschließt, die mit der zweiten UDN-Gruppe assoziiert sind, wobei sich die dritten Berechtigungen von den ersten Berechtigungen unterscheiden;
Erstellen eines zusätzlichen sekundären EAP-Dialogs (232) mit der Vorrichtung als Reaktion auf die dritte Anforderung, wobei:
der zusätzliche sekundäre EAP-Dialog ein Empfangen der dritten Berechtigungen von der Vorrichtung einschließt;
die dritten Berechtigungen von der Vorrichtung in einem Out-of-Band-Prozess zwischen der Vorrichtung und einer UDN-Cloud bezogen wurden; und
die dritten Berechtigungen keine Media-Access-Controller-Adresse, MAC-Adresse, einschließen;
Authentifizieren der dritten Berechtigungen, die mit der zweiten UDN-Gruppe assoziiert sind;
als Reaktion auf die Authentifizierung der dritten Berechtigungen, wenn die Authentifizierung der dritten Berechtigungen erfolgreich ist (234):
Gewähren von Zugriff auf die zweite UDN-Gruppe für die Vorrichtung (236); und
Anweisen der UDN-Cloud (112) zum:
Aktualisieren der ersten Liste, um die Vorrichtung aus der ersten UDN-Gruppe zu löschen (238); und
Speichern einer Angabe, dass die Vorrichtung mit der zweiten UDN-Gruppe assoziiert ist, in einer zweiten Liste, die mit der zweiten UDN-Gruppe assoziiert ist (238),
oder wenn die Authentifizierung der dritten Berechtigungen nicht erfolgreich ist, Verweigern von Zugriff auf die zweite UDN-Gruppe für die Vorrichtung; und
Fortsetzen des Zulassens von Zugriff auf das drahtlose Netzwerk für die Vorrichtung.

3. Verfahren nach Anspruch 2, wobei das drahtlose Netzwerk (106) eine Vielzahl von UDN-Gruppen umfasst, einschließend die erste UDN-Gruppe und die zweite UDN-Gruppe, wobei jede jeweilige UDN-Gruppe mit einem jeweiligen Profil des Benutzers assoziiert ist.

4. Verfahren nach einem der Ansprüche 1 bis 3, wobei die zweiten Berechtigungen mindestens eine bzw. einen von einer Kennung, die mit der ersten UDN-Gruppe assoziiert ist, oder einem Benutzernamen und einem Kennwort, die mit der ersten UDN-Gruppe assoziiert sind, umfassen.

5. Verfahren nach einem der Ansprüche 1 bis 4, wobei die ersten Berechtigungen durch einen Authentifizierungsdienst (116), der mit dem drahtlosen Netzwerk (106) assoziiert ist, authentifiziert werden und die zweiten Berechtigungen durch einen von dem Authentifizierungsdienst oder einem Authentifizierungsdienst eines Dritten authentifiziert werden.

6. Verfahren nach einem der Ansprüche 1 bis 5, wobei die zweiten Berechtigungen eine dekorierte Netzwerkzugriffskennung umfassen.

7. Verfahren nach einem der Ansprüche 1 bis 6, wobei der sekundäre EAP-Dialog (220) eine Kennung umfassen kann, die mit der ersten UDN-Gruppe assoziiert ist.

8. Verfahren nach einem der Ansprüche 1 bis 7, ferner umfassend:
Senden einer Anforderung nach sekundären Berechtigungen an die Vorrichtung (102) und als Reaktion auf das Authentifizieren der ersten Berechtigungen, wobei die Anforderung eine Kennung einschließt, die mit der ersten UDN-Gruppe assoziiert ist;
Empfangen einer Nachricht, einschließend die zweiten Berechtigungen, von der Vorrichtung; und
Erstellen des sekundären EAP-Dialogs mit der Vorrichtung als Reaktion auf das Empfangen der zweiten Berechtigungen.

9. Verfahren, umfassend:
Anzeigen einer oder mehrerer benutzerdefinierter Netzwerkgruppen, UDN-Gruppen, innerhalb eines drahtlosen Netzwerks (106) auf einer Benutzeroberfläche einer Vorrichtung (102), wobei jede der einen oder der mehreren UDN-Gruppen mit einem jeweiligen Profil eines Benutzers der Vorrichtung assoziiert ist;
Senden einer ersten Anforderung (216) zum Zugreifen auf das drahtlose Netzwerk von der Vorrichtung, wobei die erste Anforderung erste Berechtigungen einschließt;
als Reaktion darauf, Zugriff auf das drahtlose Netzwerk gewährt zu bekommen, Zugreifen auf das drahtlose Netzwerk durch die Vorrichtung;
Senden einer zweiten Anforderung (218) zum Zugreifen auf eine erste UDN-Gruppe der einen oder der mehreren UDN-Gruppen von der Vorrichtung, wobei die zweite Anforderung zweite Berechtigungen einschließt, die mit dem Zugreifen auf die erste UDN-Gruppe assoziiert sind, ferner wobei sich die zweiten Berechtigungen von den ersten Berechtigungen unterscheiden;
Erstellen eines sekundären EAP-Dialogs mit dem drahtlosen Netzwerk (220), wobei:
der sekundäre EAP-Dialog ein Senden der zweiten Berechtigungen von der Vorrichtung einschließt;
die zweiten Berechtigungen von der Vorrichtung in einem Out-of-Band-Prozess zwischen der Vorrichtung und einer UDN-Cloud (112) bezogen wurden; und
die zweiten Berechtigungen keine Media-Access-Controller-Adresse, MAC-Adresse, einschließen,
unter der Voraussetzung, dass Zugriff auf die erste UDN-Gruppe durch den Controller (110) des drahtlosen Netzwerks gewährt wird, Zugreifen auf die erste UDN-Gruppe durch die Vorrichtung; und
Fortsetzen des Zugreifens auf das drahtlose Netzwerk durch die Vorrichtung.

10. Verfahren nach Anspruch 9, ferner umfassend:
Erzeugen eines ersten Profils, das mit der ersten UDN-Gruppe assoziiert ist, und eines zweiten Profils, das mit einer zweiten UDN-Gruppe assoziiert ist, durch die Vorrichtung (102), wobei das erste Profil und das zweite Profil ein und dieselbe primäre Kennung umfassen, und wobei das erste Profil eine sekundäre Kennung umfasst, die sich von einer sekundären Kennung des zweiten Profils unterscheidet.

11. Verfahren nach Anspruch 9 oder 10, wobei die zweite Anforderung (218) als Reaktion auf ein Empfangen einer Benutzereingabe gesendet wird, die ein erstes Profil auswählt, das mit der ersten UDN-Gruppe assoziiert ist.

12. Verfahren nach einem der Ansprüche 9 bis 11, weiterhin umfassend:
Senden einer dritten Anforderung (230) zum Zugreifen auf eine zweite UDN-Gruppe der einen oder der mehreren UDN-Gruppen von der Vorrichtung (102), wobei die dritte Anforderung dritte Berechtigungen einschließt, die mit dem Zugreifen auf die zweite UDN-Gruppe assoziiert sind;
Erstellen eines zusätzlichen sekundären EAP-Dialogs mit dem drahtlosen Netzwerk (106) (232), wobei:
der zusätzliche sekundäre EAP-Dialog ein Empfangen der dritten Berechtigungen von der Vorrichtung einschließt;
die dritten Berechtigungen von der Vorrichtung in einem Out-of-Band-Prozess zwischen der Vorrichtung und einer UDN-Cloud (112) bezogen wurden; und
die dritten Berechtigungen keine Media-Access-Controller-Adresse, MAC-Adresse, einschließen; und
unter der Voraussetzung, dass Zugriff auf die zweite UDN-Gruppe durch den Controller (110) des drahtlosen Netzwerks gewährt wird, Zugreifen auf die zweite UDN-Gruppe durch die Vorrichtung; und
Fortsetzen des Zugreifens auf das drahtlose Netzwerk durch die Vorrichtung.

13. Gerät, umfassend einen Controller (110) eines drahtlosen Netzwerks (106), wobei das Gerät umfasst:
Mittel zum Empfangen einer ersten Anforderung (216) zum Verbinden mit dem drahtlosen Netzwerk von einer Vorrichtung eines Benutzers (102), wobei die erste Anforderung erste Berechtigungen einschließt;
Mittel zum Authentifizieren der ersten Berechtigungen (116);
Mittel zum Gewähren von Zugriff auf das drahtlose Netzwerk für die Vorrichtung als Reaktion auf eine Authentifizierung der ersten Berechtigungen;
Mittel zum Empfangen einer zweiten Anforderung (218) zum Verbinden mit einer ersten benutzerdefinierten Netzwerkgruppe, UDN-Gruppe, innerhalb des drahtlosen Netzwerks von der Vorrichtung, wobei die zweite Anforderung zweite Berechtigungen einschließt, die mit der ersten UDN-Gruppe assoziiert sind, wobei sich die zweiten Berechtigungen von den ersten Berechtigungen unterscheiden;
Mittel zum Erstellen eines sekundären EAP-Dialogs (220) mit der Vorrichtung als Reaktion auf die zweite Anforderung, wobei:
der sekundäre EAP-Dialog ein Empfangen der zweiten Berechtigungen von der Vorrichtung einschließt;
die zweiten Berechtigungen von der Vorrichtung in einem Out-of-Band-Prozess (116) zwischen der Vorrichtung und einer UDN-Cloud (112) bezogen wurden; und
die zweiten Berechtigungen keine Media-Access-Controller-Adresse, MAC-Adresse, einschließen;
Mittel zum Authentifizieren der zweiten Berechtigungen, die mit der ersten UDN-Gruppe assoziiert sind (116);
als Reaktion auf die Authentifizierung der zweiten Berechtigungen, wenn die Authentifizierung der zweiten Berechtigungen erfolgreich ist (222), Mittel zum:
Gewähren von Zugriff auf die erste UDN-Gruppe für die Vorrichtung;
Anweisen der UDN-Cloud (112), eine Angabe, dass die Vorrichtung mit der ersten UDN-Gruppe assoziiert ist, in einer ersten Liste, die mit der ersten UDN-Gruppe assoziiert ist, zu speichern (226),
oder wenn die Authentifizierung der zweiten Berechtigungen nicht erfolgreich ist, Verweigern von Zugriff auf die erste UDN-Gruppe für die Vorrichtung; und
Mittel zum Fortsetzen des Zulassens von Zugriff auf das drahtlose Netzwerk für die Vorrichtung,
wobei das Gerät optional ferner Mittel zum Implementieren des Verfahrens nach einem der Ansprüche 2 bis 8 umfasst.

14. Gerät, umfassend:
Mittel zum Anzeigen einer oder mehrerer benutzerdefinierter Netzwerkgruppen, UDN-Gruppen, innerhalb eines drahtlosen Netzwerks (106) auf einer Benutzeroberfläche einer Vorrichtung (102), wobei jede der einen oder der mehreren UDN-Gruppen mit einem jeweiligen Profil eines Benutzers der Vorrichtung assoziiert ist;
Mittel zum Senden einer ersten Anforderung (216) zum Zugreifen auf das drahtlose Netzwerk von der Vorrichtung, wobei die erste Anforderung erste Berechtigungen einschließt;
Mittel zum Zugreifen auf das drahtlose Netzwerk durch die Vorrichtung als Reaktion darauf, Zugriff auf das drahtlose Netzwerk gewährt zu bekommen;
Mittel zum Senden einer zweiten Anforderung (218) zum Zugreifen auf eine erste UDN-Gruppe der einen oder der mehreren UDN-Gruppen von der Vorrichtung, wobei die zweite Anforderung zweite Berechtigungen einschließt, die mit dem Zugreifen auf die erste UDN-Gruppe assoziiert sind, ferner wobei sich die zweiten Berechtigungen von den ersten Berechtigungen unterscheiden;
Mittel zum Erstellen eines sekundären EAP-Dialogs mit dem drahtlosen Netzwerk (220), wobei:
der sekundäre EAP-Dialog ein Senden der zweiten Berechtigungen von der Vorrichtung einschließt;
die zweiten Berechtigungen von der Vorrichtung in einem Out-of-Band-Prozess zwischen der Vorrichtung und einer UDN-Cloud (112) bezogen wurden; und
die zweiten Berechtigungen keine Media-Access-Controller-Adresse, MAC-Adresse, einschließen,
Mittel zum Zugreifen auf die erste UDN-Gruppe durch die Vorrichtung unter der Voraussetzung, dass Zugriff auf die erste UDN-Gruppe durch den Controller (110) des drahtlosen Netzwerks gewährt wird; und
Mittel zum Fortsetzen des Zugreifens auf das drahtlose Netzwerk durch die Vorrichtung,
wobei das Gerät optional ferner Mittel zum Implementieren des Verfahrens nach einem der Ansprüche 10 bis 12 umfasst.

15. Computerprogramm, Computerprogrammprodukt oder computerlesbares Medium, das Anweisungen umfasst, die bei Ausführung durch einen Computer bewirken, dass der Computer die Schritte des Verfahrens nach einem der Ansprüche 1 bis 12 durchführt.

## Revendications

1. Procédé mis en œuvre par un contrôleur (110) d'un réseau sans fil (106), le procédé comprenant :
la réception d'une première demande (216) de connexion au réseau sans fil à partir d'un dispositif d'un utilisateur (102), la première demande comportant des premiers justificatifs (402) ;
l'authentification des premiers justificatifs (404) ;
l'accord au dispositif de l'accès au réseau sans fil en réponse à l'authentification des premiers justificatifs (406) ;
la réception, à partir du dispositif, d'une deuxième demande (218) de connexion à un premier groupe de réseaux définis par l'utilisateur, UDN, au sein du réseau sans fil, la deuxième demande comportant des deuxièmes justificatifs associés au premier groupe UDN (408), dans lequel les deuxièmes justificatifs diffèrent des premiers justificatifs ;
l'établissement, en réponse à la deuxième demande, d'un dialogue EAP secondaire (220) avec le dispositif (410), dans lequel :
le dialogue EAP secondaire comporte la réception, à partir du dispositif, des deuxièmes justificatifs ;
les deuxièmes justificatifs ayant été obtenus par le dispositif dans un processus hors bande entre le dispositif et un nuage UDN (112) ; et
les deuxièmes justificatifs ne comportent pas d'adresse de contrôleur d'accès au support, MAC ;
l'authentification des deuxièmes justificatifs associés au premier groupe UDN (412) ;
en réponse à l'authentification des deuxièmes justificatifs, si l'authentification des deuxièmes justificatifs réussit (222) :
l'accord au dispositif de l'accès au premier groupe UDN (414) ; et
l'instruction au nuage UDN (112) de stocker une indication que le dispositif est associé au premier groupe UDN dans une première liste associée au premier groupe UDN (226, 416),
ou, si l'authentification des deuxièmes justificatifs ne réussit pas, le refus au dispositif de l'accès au premier groupe UDN ; et
la continuation de l'autorisation du dispositif à accéder au réseau sans fil.

2. Procédé selon la revendication 1, comprenant en outre :
la réception, à partir du dispositif (102), d'une troisième demande (230) de connexion à un deuxième groupe UDN au sein du réseau sans fil (106), la troisième demande comportant trois justificatifs associés au deuxième groupe UDN, dans lequel les troisièmes justificatifs diffèrent des premiers justificatifs;
l'établissement, en réponse à la troisième demande, d'un dialogue EAP secondaire supplémentaire (232) avec le dispositif, dans lequel :
le dialogue EAP secondaire supplémentaire comporte la réception, à partir du dispositif, des troisièmes justificatifs ;
les troisièmes justificatifs ayant été obtenus par le dispositif dans un processus hors bande entre le dispositif et un nuage UDN ; et
les troisièmes justificatifs ne comportent pas d'adresse de contrôleur d'accès au support, MAC ;
l'authentification des troisièmes justificatifs associés au deuxième groupe UDN ;
en réponse à l'authentification des troisièmes identifiants, si l'authentification des troisièmes justificatifs réussit (234) :
l'accord au dispositif de l'accès au deuxième groupe UDN dispositif (236) ; et
l'instruction au nuage UDN (112) de :
mettre à jour la première liste pour retirer le dispositif du premier groupe UDN (238) ; et
stocker une indication que le dispositif est associé au deuxième groupe UDN dans une seconde liste associée au deuxième groupe UDN (238),
ou, si l'authentification des troisièmes justificatifs ne réussit pas, le refus au dispositif de l'accès au deuxième groupe UDN ; et
la continuation de l'autorisation au dispositif d'accéder au réseau sans fil.

3. Procédé selon la revendication 2, dans lequel le réseau sans fil (106) comprend une pluralité de groupes UDN, comportant le premier groupe UDN et le deuxième groupe UDN, chaque groupe UDN respectif étant associé à un profil respectif de l'utilisateur.

4. Procédé selon l'une quelconque des revendications 1 à 3, dans lequel les deuxièmes justificatifs comprennent au moins un identifiant associé au premier groupe UDN ou un nom d'utilisateur et un mot de passe associés au premier groupe UDN.

5. Procédé selon l'une quelconque des revendications 1 à 4, dans lequel les premiers justificatifs sont authentifiés par un service d'authentification (116) associé au réseau sans fil (106) et les deuxièmes justificatifs sont authentifiés par l'un du service d'authentification ou d'un service d'authentification tiers.

6. Procédé selon l'une quelconque des revendications 1 à 5, dans lequel les deuxièmes justificatifs comprennent un identifiant d'accès réseau décoré.

7. Procédé selon l'une quelconque des revendications 1 à 6, dans lequel le dialogue secondaire EAP (220) peut comprendre un identifiant associé au premier groupe UDN.

8. Procédé selon l'une quelconque des revendications 1 à 7, comprenant en outre :
l'envoi, au dispositif (102) et en réponse à l'authentification des premiers identifiants, d'une demande de justificatifs secondaires, la demande comportant un identifiant associé au premier groupe UDN ;
la réception, à partir du dispositif, d'un message comportant les deuxièmes justificatifs ; et
l'établissement, en réponse à la réception des deuxièmes justificatifs, du dialogue EAP secondaire avec le dispositif.

9. Procédé comprenant :
l'affichage, sur une interface utilisateur d'un dispositif (102), d'un ou plusieurs groupes de réseaux définis par l'utilisateur, UDN, au sein d'un réseau sans fil (106), dans lequel chacun des un ou plusieurs groupes UDN est associé à un profil respectif d'un utilisateur du dispositif ;
l'envoi, à partir du dispositif, d'une première demande (216) d'accès au réseau sans fil, la première demande comportant des premiers justificatifs ;
en réponse à l'accord de l'accès au réseau sans fil, l'accès, par le dispositif, au réseau sans fil ;
l'envoi, à partir du dispositif, d'une deuxième demande (218) d'accès à un premier groupe UDN des un ou plusieurs groupes UDN, dans lequel la deuxième demande comprend des deuxièmes justificatifs associés à l'accès au premier groupe UDN, dans lequel en outre les deuxièmes justificatifs diffèrent des premiers justificatifs ;
l'établissement, avec le réseau sans fil, d'un dialogue EAP secondaire (220) dans lequel :
le dialogue EAP secondaire comporte l'envoi, à partir du dispositif, des deuxièmes justificatifs ;
les deuxièmes justificatifs ayant été obtenus par le dispositif dans un processus hors bande entre le dispositif et un nuage UDN (112) ; et
les deuxièmes justificatifs ne comportent pas d'adresse de contrôleur d'accès au support, MAC,
sous réserve de l'accord par le contrôleur (110) du réseau sans fil de l'accès au premier groupe UDN, l'accès par le dispositif au premier groupe UDN ; et
la continuation de l'accès au réseau sans fil par le dispositif.

10. Procédé selon la revendication 9, comprenant en outre :
la création, par le dispositif (102), d'un premier profil associé au premier groupe UDN et d'un second profil associé à un deuxième groupe UDN, dans lequel le premier profil et le second profil comprennent un même identifiant principal, et dans lequel le premier profil comprend un identifiant secondaire différent d'un identifiant secondaire du second profil.

11. Procédé selon la revendication 9 ou 10, dans lequel la deuxième demande (218) est envoyée en réponse à la réception d'une entrée utilisateur sélectionnant un premier profil associé au premier groupe UDN.

12. Procédé selon l'une quelconque des revendications 9 à 11, comprenant en outre :
l'envoi, à partir du dispositif (102), d'une troisième demande (230) d'accès à un deuxième groupe UDN des un ou plusieurs groupes UDN, dans lequel la troisième demande comprend des troisièmes justificatifs associés à l'accès au deuxième groupe UDN ;
l'établissement, avec le réseau sans fil (106), d'un dialogue secondaire EAP supplémentaire (232), dans lequel :
le dialogue EAP secondaire supplémentaire comporte la réception, à partir du dispositif, des troisièmes justificatifs ;
les troisièmes justificatifs ayant été obtenus par le dispositif dans un processus hors bande entre le dispositif et un nuage UDN (112) ; et
les troisièmes justificatifs ne comportent pas d'adresse de contrôleur d'accès au support, MAC ; et
sous réserve de l'accord par le contrôleur (110) du réseau sans fil de l'accès au deuxième groupe UDN, l'accès par le dispositif au deuxième groupe UDN ; et
la continuation de l'accès au réseau sans fil par le dispositif.

13. Appareil comprenant un contrôleur (110) d'un réseau sans fil (106), l'appareil comprenant :
un moyen de réception d'une première demande (216) de connexion au réseau sans fil à partir d'un dispositif d'un utilisateur (102), la première demande comportant des premiers justificatifs (402) ;
un moyen d'authentification des premiers justificatifs (404) ;
un moyen d'accord au dispositif de l'accès au réseau sans fil en réponse à l'authentification des premiers justificatifs ;
un moyen de réception, à partir du dispositif, d'une deuxième demande (218) de connexion à un premier groupe de réseaux définis par l'utilisateur, UDN, au sein du réseau sans fil, la deuxième demande comportant des deuxièmes justificatifs associés au premier groupe UDN (408), dans lequel les deuxièmes justificatifs diffèrent des premiers justificatifs ;
un moyen d'établissement, en réponse à la deuxième demande, d'un dialogue EAP secondaire (220) avec le dispositif (410), dans lequel :
le dialogue EAP secondaire comporte la réception, à partir du dispositif, des deuxièmes justificatifs ;
les deuxièmes justificatifs ayant été obtenus par le dispositif dans un processus hors bande entre le dispositif et un nuage UDN (112) ; et
les deuxièmes justificatifs ne comportent pas d'adresse de contrôleur d'accès au support, MAC ;
un moyen d'authentification des deuxièmes justificatifs associés au premier groupe UDN (412) ;
en réponse à l'authentification des deuxièmes justificatifs, un moyen, si l'authentification des deuxièmes justificatifs réussit (222) :
d'accord au dispositif de l'accès au premier groupe UDN (414) ; et
d'instruction au nuage d'UDN (112) de stocker une indication que le dispositif est associé au premier groupe UDN dans une première liste associée au premier groupe UDN (226),
ou, si l'authentification des deuxièmes justificatifs ne réussit pas, de refus au dispositif de l'accès au premier groupe UDN ; et
un moyen de continuation de l'autorisation au dispositif d'accéder au réseau sans fil
l'appareil comprenant en outre un moyen de mise en œuvre du procédé selon l'une des revendications 2 à 8.

14. Appareil comprenant :
un moyen d'affichage, sur une interface utilisateur d'un dispositif (102), d'un ou plusieurs groupes de réseaux définis par l'utilisateur, UDN, au sein d'un réseau sans fil (106), dans lequel chacun des un ou plusieurs groupes UDN est associé à un profil respectif d'un utilisateur du dispositif ;
un moyen d'envoi, à partir du dispositif, d'une première demande (216) d'accès au réseau sans fil, la première demande comportant des premiers justificatifs ;
un moyen, en réponse à l'accord de l'accès au réseau sans fil, d'accès, par le dispositif, au réseau sans fil ;
un moyen d'envoi, à partir du dispositif, d'une deuxième demande (218) d'accès à un premier groupe UDN des un ou plusieurs groupes UDN, dans lequel la deuxième demande comprend des deuxièmes justificatifs associés à l'accès au premier groupe UDN, dans lequel en outre les seconds justificatifs diffèrent des premiers justificatifs ;
un moyen d'établissement, avec le réseau sans fil, d'un dialogue EAP secondaire (220) dans lequel :
le dialogue EAP secondaire comporte l'envoi, à partir du dispositif, des deuxièmes justificatifs ;
les deuxièmes justificatifs ayant été obtenus par le dispositif dans un processus hors bande entre le dispositif et un nuage UDN (112) ; et
les deuxièmes justificatifs ne comportent pas d'adresse de contrôleur d'accès au support, MAC,
un moyen d'accès, sous réserve de l'accord par le contrôleur (110) du réseau sans fil de l'accès au premier groupe UDN, par le dispositif au premier groupe UDN ; et
un moyen de continuation de l'accès au réseau sans fil par le dispositif,
l'appareil comprenant éventuellement en outre un moyen de mise en œuvre du procédé selon l'une quelconque des revendications 10 à 12.

15. Programme informatique, produit-programme informatique ou un support lisible comprenant des instructions qui, une fois exécutées par un ordinateur, amènent l'ordinateur à entreprendre les étapes du procédé selon l'une quelconque des revendications 1 à 12.
